(19) Europäisches Patentamt
European Patent Office
Office européen des brevets

(11) **EP 4 074 769 A1**

(12) **EUROPEAN PATENT APPLICATION**

(43) Date of publication:
**19.10.2022 Bulletin 2022/42**

(51) International Patent Classification (IPC):
***C08J 11/08*** (2006.01)       ***B29B 17/02*** (2006.01)

(21) Application number: **21168640.7**

(52) Cooperative Patent Classification (CPC):
**C08J 11/08; B29B 17/02;** C08J 2323/00

(22) Date of filing: **15.04.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Borealis AG**
**1020 Vienna (AT)**

(72) Inventors:
• **ALBRECHT, Andreas**
**4021 Linz (AT)**

• **MUSTER, Udo**
**4021 Linz (AT)**
• **HAGEMANN, Bernhard**
**4021 Linz (AT)**

(74) Representative: **Kador & Partner PartG mbB**
**Corneliusstraße 15**
**80469 München (DE)**

(54) **A PROCESS FOR SEPARATING POLYOLEFIN FRACTIONS FROM SOLID POLYMER MATERIAL MIXTURES BY MOLAR MASS FRACTIONATION**

(57)    The present invention generally relates to a process for separating polyolefin fractions from solid polymer material mixtures by molar mass fractionation. The present invention also relates to polyolefin fractions obtained by the process and the use of these fractions in the manufacture of an article.

**Fig. 2**

EP 4 074 769 A1

## Description

The present invention generally relates to a process for separating polyolefin fractions from solid polymer material mixtures by molar mass fractionation. The present invention also relates to polyolefin fractions obtained by the process and the use of these fractions in the manufacture of an article.

## Background

The challenge of disposal of accumulated waste plastics and corresponding environmental issues have received widespread attention from the public and professionals. Therefore, besides the concepts of the prevention of plastic waste in general and the prevention of leakage of plastic waste into the environment in particular, recycling of waste plastics material has become an important topic. Waste plastics can be turned into resources for new plastic products. Hence, environmental and economic aspects can be combined in recycling and reusing waste plastics material.

Since the mid 90-ies, several European countries have begun to implement waste collection systems, which allow more target orientated collection and separation of plastic materials from other waste materials. These systems enable a broad separation of polymer types from each other. In parallel, several plastic recycling processes have been developed, in particular aiming on the increase of product quality of the recyclable polymer materials.

There are different routes of plastic recycling commonly known including mechanical recycling (i.e. material sorting), advanced physical or solvent based recycling and chemical processing (e.g. thermochemical recycling such as pyrolysis or gasification and solvolysis). Among these methods, mechanical recycling and chemical recycling are the most widely practiced.

Nowadays, advanced mechanical or advanced material recycling includes separation steps such as shredding, vibrating/rotary sieving, advanced sorting methods supported by spectrometric-methods [e.g. NIR/VIS] and wash operations to reduce organic, biologic and partly odor contaminants primary from the surface of the recyclable plastic material, as well as achieving a polymer type enriched and more homogeneous polymer recyclate fraction (e.g. of 85 to 95 wt% of a respective polymer type). However, the product quality remains relatively poor and does not allow for both food contact and use in high performance applications.

The second plastic recycling route is chemical or feedstock recycling, comprising solvolysis and thermochemical processing. This route provides a promising opportunity to recover pre-sorted and pre-treated solid plastic waste to obtain feedstocks for the petrochemical industry, which may be processed to plastics again, as well as to chemical commodities and fuels. To degrade the polymeric structure of the plastic solid mixture to shorter hydrocarbons up to monomeric building blocks, heat, catalysts and solvents have to be applied, such that the total energy input is significantly higher in comparison to virgin polymerization from crude oil. Thus, the main drawbacks are the extravagant and energy-consuming thermal degradation together with $CO_2$-emission.

The third plastic recycling route is advanced physical or "Solvent based Recycling" (SbR). In SbR-processing the polymer is initially dissolved in an appropriate solvent and next either the solubility of the dissolved polymer is decreased by the addition of a non-solvent (dissolution/precipitation) and/or solidification of the polymer is caused by the preferably complete separation of the solvent from the solidified polymer by thermal unit operations (evaporation, drying etc.). The main advantages of SbR-processing can be found in the preservation of the original molecular structure and the mostly relevant properties, density and MFR, for re-processing (compounding, conversion), and in the possibility to separate polymer additives, e.g. fillers, stabilizers, anti-oxidants and/or pigments, to gain a virgin-like high-quality polyolefin, which can be finally adjusted to the desired polyolefin grade by compounding.

EP 3 339 361 (A1) describes a polymer solution recycling process including the step of contacting a waste polymer at a temperature of 140 °C and at a pressure of 6.2 MPa (62 bar) with n-butane. This step is repeated four times to obtain five fractions. The residue of this step is subsequently dissolved again in n-butane at 140 °C and 12.5 MPa (125 bar) by pressurization with nitrogen, to obtain a sixth fraction. Furthermore, settling and removal of non-dissolved polymer is performed and an adsorption step is added using a pure silica bed followed by an aluminum-oxide (zeolite) bed at 140 °C and 12.5 MPa (125 bar). The polymer is then solidified by depressurizing the system to atmospheric pressure for evaporation of the low boiling n-butane solvent. The disadvantage of this process lies in the high pressure processing, which needs experienced staff and causes high investment costs, as the material strength of the plant must be sufficiently dimensioned. A further disadvantage of this process is that it is operated discontinuously. This is in particular problematic as it is generally difficult to design a continuously operated high pressure process.

DE 102016015199 A1 uses a low pressure dissolving process for the separation of post-industrial consumer waste, in particular the separation of polyethylene and polypropylene. Solvent is a higher non-polar organic compound (methylcyclohexane) having a boiling point temperature of 99°C. The disadvantage of this process is the limitation to the separation of two pure polyolefin types (h-PP and LDPE) from a polymer mixture (in a ratio of 1:1). Further disadvantage of this process is the high residual solvent content in the intermediate polymer product (up to 5 vol.-%). Removing this unwanted solvent requires complex and expensive post-treatment processing e.g. by a gas-dense centrifuge.

Therefore, generally, the polymer dissolution recycling processes and in particular the polyolefin polymer dissolution recycling processes known in the prior art are either high pressure processes having the disadvantage of high costs and efforts or employ solvents causing problems in the after process-treatment in particular as regards solvent removal.

Furthermore, many of the solution recycling processes of polyolefins described in the prior art are designed in a way that no continuous process is possible, for example through the use of high pressure process technique.

It is a general desire of the solution recycling processes of the prior art to provide virgin-like polymers, i.e. polymers that are very similar, ideally identical, in their structures and properties to freshly polymerized polymers. The need for high quality, virgin-like recycled polymers is especially important for food and drug contact applications, such as food and drug packaging materials. Therefore, the solution recycling processes of the prior art focus on the complete separation of polymer components from each other.

However, there are other applications where virgin-like grades of polymers are not required, however physical properties of the polymers are usually important. Examples of such applications are injection molding and compounding applications, such as the production of functional caps and helmets, bottles, spray pumps, lids, boxes, laundry tubs, containers, pails, films for packaging of non-food applications, sophisticated rigid packaging solutions, compounds for automotive applications and pipe materials.

**Description of the invention**

Thus, it is an object of the present invention to provide a process for the preparation of polyolefin material, preferably as recyclates from polymer-containing waste sources, wherein the polyolefin material comprises high-grade polyolefins with defined physical properties, without the necessity for the polyolefin products to consist of only one class of polyolefin in a virgin-like state.

It is a further object of the present invention to provide respective polyolefin material that may be used in a variety of applications such as injection molding and compounding applications, e.g. in the manufacture of functional caps and helmets, bottles, spray pumps, lids, boxes, laundry tubs, containers, pails, films for packaging of non-food applications, sophisticated rigid packaging solutions, compounds for automotive applications and pipe materials.

The present invention is based on the surprising finding that polyolefins separated in fractions according to their molar masses (i.e. by molar mass fractionation) suffice the requirements on polyolefin grades for use in the above applications. The present invention if further based on the surprising finding that polyolefins are dissolved according to their molar masses as a function of dissolution temperatures.

Therefore, the present invention provides a process for separating polyolefin fractions from solid polymer material mixtures by molar mass fractionation, the process comprising the steps of:

A) providing a solid polymer material mixture (PMM) comprising at least 75 wt% of polyolefin material, based on the total weight of the solid polymer material mixture, wherein the polyolefin material comprises polypropylene and/or polyethylene;

B1) contacting the solid polymer material mixture with a non-polar solvent comprising at least one n-alkane comprising from 5 to 10 carbon atoms, to form a first composition (C1) comprising the solid polymer material mixture and the solvent;

C1) heating the first composition (C1) at a first dissolution temperature (T1) in the range of 80 to 120 °C and a first pressure (P1) in the range of 0.1 to 1.1 MPa abs. for a first period (M1) of from 5 min to 2 h, to obtain a first solution (S1) comprising the solvent and a first polyolefin fraction (F1), the first polyolefin fraction (F1) being dissolved in the solvent, and a first undissolved material (U1);

D1) separating the first undissolved material (U1) from the first solution (S1);

E1) separating the first polyolefin fraction (F1) from the first solution (S1) to obtain a solidified first polyolefin fraction (F1) having a first weight average molecular weight ($M_w$), and optionally recovering the solvent;

B2) contacting the separated first undissolved material (U1) with a non-polar solvent comprising at least one n-alkane comprising from 5 to 10 carbon atoms, to form a second composition (C2) comprising the separated first undissolved material (U1) and the solvent;

C2) heating the second composition (C2) at a second dissolution temperature (T2) in the range of 90 to 160 °C, with the proviso that the second dissolution temperature (T2) is higher than the first dissolution temperature (T1), and a second pressure (P2) in the range of 0.1 to 1.1 MPa abs. for a second period (M2) of from 5 min to 2 h, to obtain a solution (S2) comprising the solvent and a second polyolefin fraction (F2), the second polyolefin fraction (F2) being dissolved in the solvent, and, optionally, a second undissolved material (U2);

D2) optionally, separating the second undissolved material (U2) from the second solution (S2); and

E2) separating the second polyolefin fraction (F2) from the second solution (S2) to obtain a solidified second polyolefin fraction (F2) having a second weight average molecular weight ($M_w$) that is higher than the first weight average molecular weight ($M_w$) of the first polyolefin fraction (F1), and optionally recovering the solvent.

The polyolefin fractions prepared according to the process of the present invention are characterized by more defined ranges of physical properties, as regards not only their molar masses, however also their rheology properties (e.g. melt flow rates) or viscosities, and these fractions are particularly suitable for direct use in many applications, such as in the manufacture of polyolefin products as those exemplified above.

Polymer material mixtures of e.g. polymer waste generally contain polymers with different ranges of properties. The present invention provides an efficient and low-complexity process for the simultaneous separation and purification of polyolefins fractions from the polymer material mixtures, wherein the fractions are enriched in particular polyolefins and have defined and/or narrowed ranges of physical properties. By this process, target-oriented fractions may be prepared, which can directly be used in the desired applications. For example, fractions of polyolefins having high molecular masses and low melt flow rates can be prepared, which are difficult to obtain by other recycling methods, and thus are usually prepared by admixing of virgin polyolefin to recycled polyolefins. Generally, polymers with defined rheology properties are desired for the application in different polymer extrusion techniques. Thus, the obtained polyolefin factions show both remarkable advantages in post-treatment (compounding) by their relatively constant MFR processing and their compatibility in post-processing of polyolefin mixtures having e.g. different types of polyolefins such as i-PP together with HDPE.

By the process according to the present invention the polyolefin fractions are separated from the solid polymer material mixtures by molar mass fractionation.

Within the meaning of the present invention, the compositions of the dissolved polyolefin fraction and the respective solidified polyolefin fraction are similar. Unless otherwise indicated the properties described herein apply to the recovered solidified fractions. However, they usually also apply to the dissolved fractions.

Also within the meaning of the present invention, unless otherwise indicated, the percentages are weight percentages (wt%), usually based on the total weight of the respective entity.

Further, it should be understood within the meaning of the present invention that the below-described embodiments may be combined.

Molar mass fractionation of polyolefins refers to a method, wherein polyolefins are separated in different fractions based on their molar masses, in particular their weight average molecular weight ($M_w$). Accordingly, fractions are obtained, which contain polyolefins with identical or similar molar masses within one fraction.

Preferably, earlier polyolefin fractions obtained at lower dissolution temperatures have a lower weight average molecular weight ($M_w$) than later polyolefin fractions obtained at higher dissolution temperatures. According to the invention, the weight average molecular weight ($M_w$) of the first polyolefin fraction (F1) is lower than the weight average molecular weight ($M_w$) of the second polyolefin fraction (F2).

In one embodiment, the difference in the weight average molecular weight ($M_w$) between two polyolefin fractions (e.g. (F1) and (F2)) is at least 5,000 g/mol, preferably at least 7,500 g/mol, more preferably at least 10,000 g/mol and usually up to 30,000 g/mol per 10 °C difference in dissolution temperature. In other words, the weight average molecular weight of a polyolefin fraction (e.g. (F2)) that was dissolved at a temperature of 30 °C higher than another polyolefin fraction (e.g. (F1)) is at least 15,000 g/mol, more preferably at least 22,500 g/mol, most preferably at least 30,000 g/mol and usually up to 90,000 g/mol higher than the weight average molecular weight of the other polyolefin fraction (e.g. (F1)).

In a particular embodiment, the difference in the weight average molecular weight ($M_w$) between two polyolefin fractions (e.g. (F1) and (F2)) is at least 5 %, preferably at least 10 %, more preferably at least 15 %, most preferably at least 20 % and usually up to 50 %, based on the weight average molecular weight of the respective polyolefin fraction at the lower dissolution temperature (e.g. (F1)).

The process according to the present invention preferably provides polyolefin fractions having different polydispersity indices (PDI). The polydispersity index (PDI=$M_w/M_n$) is a measurement index for the broadness of the molar mass distribution (MWD) of polymer material. Preferably, earlier polyolefin fractions (e.g. (F1)) obtained at lower dissolution temperatures have a higher PDI than the later polyolefin fractions (e.g. (F2)) obtained at higher dissolution temperatures, i.e. the PDI of (F1) is higher than the PDI of (F2).

In one embodiment, the difference in the polydispersity index (PDI) between two polyolefin fractions (e.g. (F1) and (F2)) is at least 1 %, preferably at least 2 %, more preferably at least 3 % and usually up to 10 %, based on the PDI of the respective polyolefin fraction (e.g. (F1)) at the lower dissolution temperature, per 10 °C difference in dissolution temperature. Preferably, the PDI of the earlier polyolefin fraction (e.g. (F1)) obtained at a lower dissolution temperature is higher than the PDI of the later polyolefin fraction (e.g. (F2)) obtained at a higher dissolution temperature. In other words, the PDI of a polyolefin fraction (e.g. (F2)) that was dissolved at a temperature of 30 °C higher than another polyolefin fraction (e.g. (F1)) is at least 3 %, more preferably at least 6 %, most preferably at least 9 % and usually up to 30 % higher than the PDI of the other polyolefin fraction (e.g. (F1)), based on the PDI of the respective polyolefin fraction at the lower dissolution temperature (e.g. (F1)).

In a particular embodiment, the difference in the polydispersity index (PDI) between two polyolefin fractions (e.g. (F1) and (F2)) is at least 5 %, preferably at least 7 %, more preferably at least 8 % and usually up to 30 %, based on the PDI of the respective polyolefin fraction (e.g. (F1)) at the lower dissolution temperature, wherein the earlier polyolefin fraction (e.g. (F1)) obtained at a lower dissolution temperature has a higher PDI than the later polyolefin fraction (e.g. (F2)) obtained at a higher dissolution temperature.

Preferably, the polydispersity index (PDI) of the polyolefin fractions is lower than the polydispersity index of the polyolefin material of the solid polymer material mixture. In one particular embodiment, the PDI of the first polyolefin fraction (e.g. (F1)) is at least 5 %, preferably at least 7 %, more preferably at least 8 % and usually up to 30 % lower than the PDI of the polyolefin material of the solid polymer material mixture, based on the PDI of the polyolefin material of the solid polymer material mixture.

Preferably, the molecular weight distribution (MWD) of each polyolefin fraction (e.g. (F1) and (F2)) is narrower than the molecular weight distribution (MWD) of the polyolefin material of the solid polymer material mixture.

In one embodiment, the molecular weight distribution (MWD) of a polyolefin fraction, preferably the first polyolefin fraction (F1), is narrower than the MWD of the polyolefin material of the solid polymer material mixture by at least 5 %, preferably at least 7 %, more preferably at least 8 % and usually up to 30 % than the MWD of the polyolefin material of the solid polymer material mixture.

The process according to the present invention preferably provides polyolefin fractions having different intrinsic viscosities (IV in dl/g). Preferably, the IV of the polyolefin fractions increase with enhanced dissolution temperatures. In other words, preferably earlier polyolefin fractions (e.g. (F1)) obtained at lower dissolution temperatures have a lower IV than later polyolefin fractions (e.g. (F2)) obtained at higher dissolution temperatures. Also preferably, the IV of the first polyolefin fraction (F1) is lower than the IV of the polyolefin material of the solid polymer material mixture.

In a particular embodiment, the difference in intrinsic viscosity (IV) between two polyolefin fractions (e.g. (F1) and (F2)) is at least 5 %, preferably at least 7 %, more preferably at least 10 % and usually up to 50 %, based on the IV of the respective polyolefin fraction (e.g. (F1)) at the lower dissolution temperature, per 10 °C difference in dissolution temperature, wherein the earlier polyolefin fraction (e.g. (F1)) obtained at a lower dissolution temperature has a lower IV than the later polyolefin fraction (e.g. (F2)) obtained at a higher dissolution temperature.

The process according to the present invention preferably provides polyolefin fractions having different melt flow rates (e.g. $MFR_2$, i.e. MFR at 230 °C with 2.16 kg load per 10 min, in g/10 min). Preferably, the $MFR_2$ of the polyolefin fractions decrease with enhanced dissolution temperatures. In other words, preferably earlier polyolefin fractions (e.g. (F1)) obtained at lower dissolution temperatures have higher $MFR_2$ than later polyolefin fractions (e.g. (F2)) obtained at higher dissolution temperatures. Also preferably, the $MFR_2$ of the first polyolefin fraction (F1) is higher than the $MFR_2$ of the polyolefin material of the solid polymer material mixture, preferably by at least 20%, more preferably at least 35 %, most preferably at least 50 % and usually up to 90 % higher, based on the $MFR_2$ of the polyolefin material of the solid polymer material mixture.

In one particular embodiment, the difference in $MFR_2$ between two polyolefin fractions (e.g. (F1) and (F2)) is at least 20 %, preferably at least 35 %, more preferably at least 50 % and usually up to 90 %, based on the $MFR_2$ of the respective polyolefin fraction (e.g. (F1)) at the lower dissolution temperature, wherein the earlier polyolefin fraction (e.g. (F1)) obtained at a lower dissolution temperature has a higher $MFR_2$ than the later polyolefin fraction (e.g. (F2)) obtained at a higher dissolution temperature.

The process according to the present invention preferably provides at least one polyolefin fraction (e.g. polyolefin fraction (F1) or (F2)), wherein the (wt/wt) ratio of one polyolefin type to the other polyolefin type (e.g. PP to PE or PE to PP, preferably PP to PE) is enhanced by a factor of at least 2, preferably at least 4, more preferably at least 6, most preferably at least 10 and preferably up to a factor of 100, when compared to the respective (wt/wt) ratio of the solid polymer material mixture.

The process according to the present invention comprises at least steps A to E2, which are preferably in a sequential order of steps, as defined above. Although, two or more steps may also be carried out simultaneously or as one single step. In one embodiment, the steps B1 and C1, or B2 and C2 may be carried out as one step, wherein the solid polymer material mixture is contacted with the solvent at the respective dissolution temperature (T1) or (T2).

In another embodiment, the steps D1 and B2 are carried out simultaneously.

The process may further comprise additional steps, as described below, which may be performed before step A, after step E2 or in-between any of the steps A to E2.

In one embodiment, steps B1 to E1 and/or steps B2 to E2 are performed sequentially without any additional steps in-between.

In another embodiment, steps A to E1 and optionally also steps B2 to E2 are performed sequentially without any additional steps in-between. In one particular embodiment steps A to E2 are performed sequentially without any additional steps in-between.

The process according to the invention may be operated as a continuous or discontinuous process. In one embodiment, the process is operated as a discontinuous process, preferably wherein the separation step D1 and/or E1 and/or the contacting step B2 are performed as steps of a batch process. A continuous process is preferably operated using a stirred tank cascade or a multistage stirred cell cascade.

In another embodiment, the process is operated as a continuous process, i.e. a flow process without interruption, wherein the separation step D1 and/or E1 and/or the contacting step B2 are performed directly and without interruption.

In one embodiment, the undissolved material (U1) separated in step D1 is directly passed to the step B2 without interruption. In this embodiment, steps B1 to E1 and B2 to D2 may be operated in parallel for different polymer material samples.

In another embodiment, the solvent obtained in step E1 and/or E2 is directly passed to the step B1 and/or B2 without interruption.

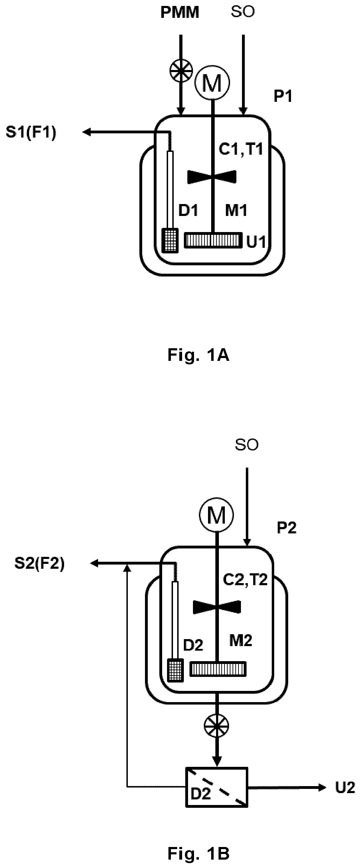

In one exemplary embodiment, Figure 1 (encompassing Figures 1A and 1B) illustrates operations of the process according to the invention as a discontinuous process. As shown in Figure 1A, the process is operated as a batch process by application of a heatable double wall stirred tank. The agitator features a shearing element, which effects that the solid particles can be hold separated during the dissolution step C1. The stirred tank is first filled with the solvent (SO), followed by the controlled addition of the solid polymer material mixture (PMM) under agitation by a conventional solid material feeding system, such as a screw feeder, rotary valve etc., until the pre-defined ratio between solvent and solid plastic material is reached and a composition (C1) as a L/S-system (slurry) is formed. Following the slurry is heated up to temperature (T1) and the resp. pressure (P1), and the whole mass is agitated for the residence time M1 (step C1). After the dissolution step C1, the L/S-system (slurry) is composed of the polyolefin-containing solution (S1), including the first polyolefin fraction (F1), and the undissolved solid phase (U1). The final polyolefin-containing solution (S1(F1)) will be discharged under pressure (P1) by stopped or low agitation over a height-adjustable dip tube (step D1) and thus separated from the undissolved solid phase (U1). The polyolefin containing solution (S1(F1)) will be further processed to obtain the first polyolefin fraction (F1) as a solidified polyolefin fraction (F1) by a solvent removal method (step E1).

As shown in Figure 1B, the procedure is repeated for the steps B2-E2 at the dissolution temperature (T2) and the resp. pressure (P2), and the initial slurry composition (C2) for the residence time (M2). The formed polyolefin containing solution (S2) can be discharged initially over the height-adjustable dip tube and/or over the separation unit at the bottom of the stirred tank (step D2). The polyolefin containing solution (S2(F2)) will be further processed to obtain the second polyolefin fraction (F2) as a solidified second polyolefin fraction (F2) by a solvent removal method (step E2). The separated undissolved solid phase (U2) can be reprocessed further.

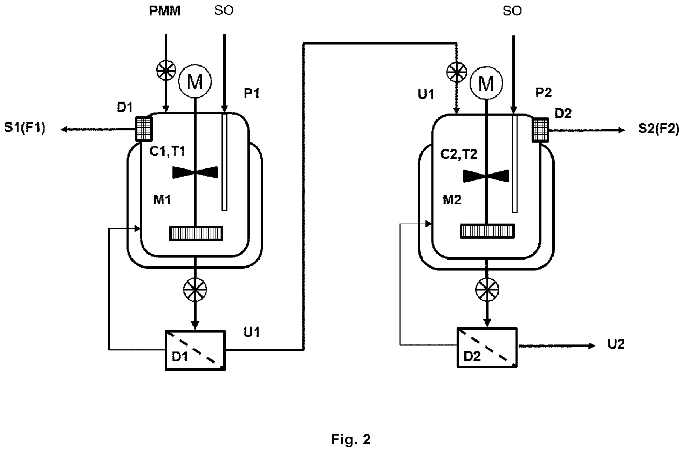

In another exemplary embodiment, Figure 2 illustrates a process according to the invention, wherein the process is operated continuously by application of a stirred tank cascade, 2 heatable double wall stirred tanks in series. The agitator features a shearing element, which effects that the solid particles can be hold separated during the dissolution steps C1/C2. The process comprises: feeding the solvent (SO) (e.g. dip tube nearby shearing agitator element) and the solid polymer material mixture (PMM) or undissolved solid phase (U1), respectively, continuously. The PMM or U1 is dissolved under operation pressure (P1/P2) and dissolving temperature (T1/T2). Polyolefin-containing solutions (S1(F1)/S2(F2)) will be discharged continuously under pressure (P1/P2) nearby the top of the stirred tank design by passing a separation unit such as a sieve (in step D1/D2), and the undissolved solid phase (U1/U2) will be discharged continuously under pressure nearby the bottom of the stirred tank. The necessary residence times (M1/M2) can be adjusted by the filling level of the stirred tank or by height-adjustable dip tubes or outlets. Eventually carried out liquid phase (S1/S2) through undissolved solid phases (U1/U2) may be recycled to the stirred tank after separation step D1/D2. The polyolefin containing solutions (S1(F1)/S2(F2)) will be further processed to obtain the polyolefin fractions (F1/F2) as respective solidified fractions (F1/F2), by a solvent removal method (in step E1/E2). The separated undissolved solid phase (U2) can then be reprocessed further.

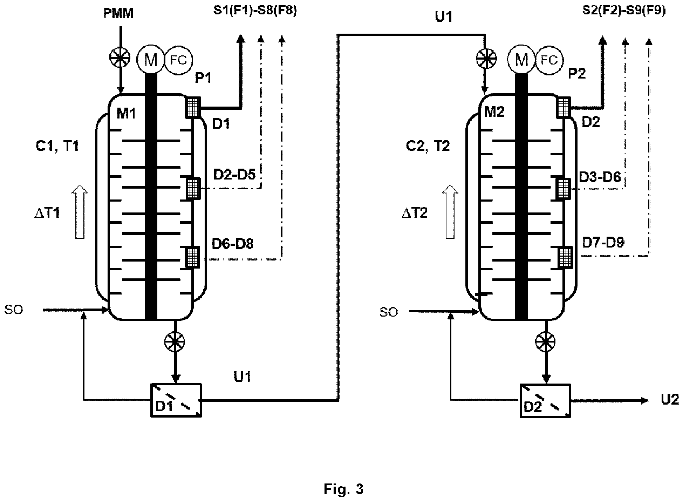

Figure 3 illustrates one preferred embodiment of the process according to the invention, where the process is operated continuously by application of special designed Rotating Disc Contactors (RDC) singular or in series. The RDC is heat-ably designed and can be operated under pressure. The number of the rotor/stator-disc-elements describe principally a stirred tank cascade design by a huge number of singular mixing cells. The advantages by application of RDC is the adjustable residence times (M1/M2) by changing the hold-up of the apparatus by speed control (FC) of the rotor and an adjustable temperature profile ($\Delta$T1/$\Delta$T2) as function of the apparatus height. Additionally the apparatus features different discharge outlets as function of the apparatus height for discharging polyolefin-containing solutions (S1(F1)) and (S2(F2)), containing the dissolved polyolefin fractions (F1) and (F2). The solid polymer material phases (PMM, U1, from the top) and the solvent (SO, bottom) are fed at opposite positions from top and bottom of the apparatus.

Thus, the more heavy solid plastic material and the lighter solvent/solution phase generate a counter current flow through the apparatus to increase the dissolution kinetics by agitation and a concentration profile between the solid polyolefin phase and the liquid polyolefin-containing solution phase. The design shown in Figure 3 principally allows the separation of the polyolefin-containing solutions (S1(F1)-S9(F9)) as a function of temperature with a ΔT of 10 °C (T1 = 80-150 °C, T2 = 90-160 °C) as a function of the apparatus height. Operation steps of the present invention are similar to the continuous operation description for the stirred tank cascade, meaning contacting the solid polyolefin material with the solvent (in step B1/B2), dissolving the polyolefin fractions (F1/F2) to obtain the polyolefin containing solutions (S1/S2) (in step C1/C2), separation of the undissolved solid materials from the polyolefin-containing solutions (S1/S2) (in step D1/D2). The polyolefin-containing solutions (S1(F1)/S2(F2)) will be further processed to obtain the polyolefin fractions (F1/F2) as solidified polyolefin fractions (F1/F2), by a solvent removal method (in step E1/E2). The separated undissolved solid phase (U2) can be reprocessed further.

The discontinuous and continuous processes illustrated in the Figures 1, 2 and 3 may be similarly applied to the possible further sequences of steps (i.e. BX to EX, wherein X stands for the order of dissolution reaction; e.g. 1, 2, 3 to 10) of the process according to the invention, in order to obtain higher polyolefin fractions, such as Fraction 3 (F3), Fraction 4 (F4), Fraction 5 (F5) and further fractions (FX).

According to step A of the process according to the invention, a solid polymer material mixture is provided. The solid polymer material mixture refers to a mixture of polymeric material in a solid state, i.e. the content of liquid such as water and solvents is lower than 5 wt% based on the total weight of the solid polymer material mixture. The solid polymer material mixture comprises at least 75 wt% of polyolefin material, preferably at least 85 wt%, more preferably at least 90 wt%, most preferably at least 95 wt%, and usually up to 100 wt% of polyolefin material, based on the total weight of the solid polymer material mixture.

The polyolefin material contains polypropylene and/or polyethylene, wherein each of these polymers is considered as a polyolefin type within the meaning of the present invention.

Preferably, the solid polymer material mixture comprises at least one polyolefin component, further preferably two or more polyolefin components. Generally, the solid polymer material mixture may comprise from 2 to 10, such as from 2 to 8 or from 2 to 5 polyolefin components. The polyolefin components can be selected from different types of polypropylene (PP) and/or polyethylene (PE), and their copolymers. The different types of polypropylene (PP) can, for example, be isotactic, syndiotactic and atactic polypropylene. The different components of polyethylene (PE) can, for example, be low density polyethylene (LDPE), linear low density polyethylene (LLDPE) and high density polyethylene (HDPE). Each of the type of polyethylene or polypropylene or their copolymers is considered as a single polyolefin component in the meaning of the present invention. The polyolefin material used in the process according to the present invention comprises polyethylene and/or polypropylene, in particular comprising homopolymers and copolymers of ethylene and propylene, respectively.

Polyethylene in the meaning of the present invention refers to an ethylene homopolymer and an ethylene copolymer having at least 50 mol%, preferably at least 70 mol% and most preferably at least 90 mol% and up to less than 100 mol% of ethylene units. Other units, preferably other alpha-olefin units, may be contained in the polyethylene. Similarly, polypropylene in the meaning of the present invention refers to a propylene homopolymer and propylene copolymer having at least 50 mol%, preferably at least 70 mol% and most preferably at least 90 mol% and up to less than 100 mol% of propylene units.

When the polyolefin material comprises both polyethylene and polypropylene, it is preferred that one of these polyolefin types is present in a higher weight content than the other. Preferably the (wt/wt) ratio of polyethylene to polypropylene or of polypropylene to polyethylene is at least 5:4, more preferably at least 3:1, even more preferably at least 4:1, most preferably at least 10:1 and up to about 100 wt% of polyethylene or polypropylene. It has been surprisingly found that best fractionation results with high enrichment of one polyolefin type in a fraction may be obtained with polyolefin material comprising an excess (wt/wt) of one of polypropylene over polyethylene or polyethylene over polypropylene by a factor at least 3, more preferably at least 5, still more preferably at least 10.

In one embodiment, the polyolefin material comprises more than 75 wt%, preferably more than 90 wt%, most preferably more than 95 wt% and up to 100 wt% of polyethylene, based on the total weight of the polyolefin material. In this embodiment, the polypropylene content may be from 0 to less than 25 wt%, based on the total weight of the polyolefin material. However, polyolefins other than polyethylene and polypropylene may also be present in the polyolefin material.

In another embodiment, the polyolefin material comprises more than 75 wt%, preferably more than 90 wt%, most preferably more than 95 wt% and up to 100 wt% of polypropylene, based on the total weight of polyolefin material. In this embodiment, the polyethylene content may be from 0 to less than 25 wt%, based on the total weight of polyolefin material. However, polyolefins other than polyethylene and polypropylene may also be present in the polyolefin material.

In particular embodiments, the polyolefin material comprises only polypropylene or polyethylene.

The solid polymer material mixture may further comprise non-polyolefin (polymer) material such as poly(ethylene terephthalate) (PET), poly(vinyl chloride) (PVC), polystyrene (PS), polycarbonate (PC), polyurethanes (PUR) and polyamides (PA). Preferably, the solid polymer material mixture comprises less than 10 wt%, preferably less than 5 wt%, more preferably less than 2 wt%, of non-polyolefin (polymer) material, based on the total weight of the solid polymer material mixture.

The solid polymer material mixture may further comprise non-polymer material such as impurities, polymer additives, antioxidants, food residues, residual perfume components, dyes and pigments, wood, ceramics, and generally components inevitably contained in the respective polymer material mixture based on its origin, i.e. from where or how the polymer mixture is derived or obtained.

In one embodiment, the solid polymer material mixture may be derived from polymer waste, such as plastic waste. The polymer or plastic waste may be obtained from plastic waste management sources as e.g. plastic fractions sorted from municipal solid waste, sorted fractions from producer responsibility organization, industrial waste streams include polymer-rich rejects from waste sorting plants. Preferably, the polymer or plastic waste is pre-treated polymer or plastic waste, wherein the content of polymers or polyolefins has been increased.

The process of the present invention is particularly suitable for separating polyolefins from colored solid polymer material mixtures. Accordingly, in one embodiment, the solid polymer material mixture, preferably the polymer or plastic waste of the above embodiment, is a colored solid polymer material mixture, preferably comprising color pigments, carbon and/or other coloring agents.

Preferably, pre-treatment of plastic waste (such as from post-consumer waste sources) is mechanical pre-treatment such as preferably dry unit operations in series, in particular, bale cutting, coarse shredding, coarse sieving, magnetic and electromagnetic separation, air and ballistic separation (2D/3D-plastic separation), NIR/VIS sorters (plastic type separation) and finally fine shredding to achieve an polyolefin enriched and surface enriched solid plastic material mixture with a particle size of less than 30 mm, preferably less than 20 mm and most preferably less than 10 mm, as determined by the sieve analysis described herein below.

Subsequently, plastic waste may also be wet-treated by washing and optionally drying.

In a further embodiment, the solid polymer material mixture may be derived from material obtained by conventional polyolefin production processes. The product of such polymerization processes, especially by the usage of multisite Ziegler-Natta catalysts and/or additionally gas phase reactors arise in powder form with often broad, bi-, tri- and multimodal distributed mol masses. The present invention allows the separation of such polyolefin powders by mol mass fractionation. The advantage is that the capacity and operability of the main polyolefin process has not to be dropped down to produce polyolefin specialties, and also production losses obtained by changeovers from one to the next polymer grade may be avoided.

In step B1 of the process, the solid polymer material mixture is contacted with a non-polar solvent comprising, or consisting of, at least one n-alkane comprising from 5 to 10 carbon atoms, i.e. n-pentane, n-hexane, n-heptane, n-octane, n-nonane and n-decane, and mixtures thereof. The most preferred non-polar solvents are n-pentane and n-hexane, such as low-chain paraffinic $C_5$ and/or $C_6$ fractions. The non-polar solvent may comprise further hydrocarbon components, such as other aliphatic and naphthenic alkanes, alkenes or aromatic alkanes in lower concentrations (i.e. up to 10 wt%). Preferably, the non-polar solvent does not comprise any polar components.

Generally, polar solvents comprise one or more compounds that have a dipole moment. Respectively, the compounds of the non-polar solvent do not have a net dipole moment. Polarity of compounds may be empirically determined. For example, they can be defined as Empirical Parameters of Solvent Polarity $E_T(30)$ or as the respective normalized values $E_T^N$, as e.g. described in Christian Reichert, "Solvatochromic Dyes as Solvent Polarity Indicators", Chemical Reviews, 1994, Vol. 94, No.8, page 2319-2558. Preferably, non-polar solvents according to the invention have an $E_T^N$ value of up to 0.2, and polar solvents an $E_T^N$ value of above 0.2, respectively.

In one particular embodiment, the non-polar solvent is a refinery gasoline fraction comprising hydrocarbons having from 5 to 10 carbon atoms, preferably a refinery light gasoline fraction comprising aliphatic hydrocarbons having 5 and 6 carbon atoms, such as petroleum ether. The advantage of using refinery gasoline fractions is that they may be withdrawn from the refinery process, used in the present process (in step B1) and fed back to the refinery process afterwards, i.e. in any one of steps E1, E2 or E3 of the process, for further distillation in the refinery environment. Such a process may provide economic benefits.

Preferably, the ratio (wt/wt) of solvent to the polymer material mixture is in the range of 3:1 to 20:1, more preferably 3:1 to 10:1 and most preferably 3:1 to 5:1, such as 4:1. For economic reasons, it is preferred that the content of solvent is relatively low. However, lower solvent ratios may have negative influence on the dissolution kinetics (e.g. the solution gets highly viscous, decrease in driving force Δconcentration as function of residence time). Higher pressures may compensate for this drawback.

In one embodiment, the contacting step B1 is carried out at room temperature (i.e. about 20 °C) and at atmospheric pressure (i.e. about 0.1 MPa abs.).

In another embodiment, the contacting step B1 is carried out at an enhanced temperature, i.e. above room temperature, such as at least 50 °C, and preferably at the dissolution temperature (T1) and at atmospheric pressure (i.e. about 0.1 MPa abs.).

In step B1 of the process, a first composition (C1) comprising the solid polymer material mixture and the solvent is formed. Preferably, the first composition (C1) is a first liquid/solid phase system (LS1), i.e. comprising the solid polymer material mixture and the liquid solvent.

In the sequential heating step C1, preferably being directly after step B1, the first composition (C1) is heated at a first dissolution temperature (T1) in the range of 80 to 150 °C and a first pressure (P1) in the range of 0.1. to 1.1 MPa abs. for a first period (M1) of from 5 min to 2 h, to obtain a first solution (S1) comprising the solvent and a first polyolefin fraction (F1), wherein the first polyolefin fraction (F1) is dissolved in the solvent, and a first undissolved material (U1).

In the heating step C1, a first polyolefin fraction (F1) is dissolved from the solid polymer material mixture. Generally, this faction contains polyolefins of the solid polymer material mixture with the lowest molar masses. Preferably, this fraction contains at least one LDPE component and/or at least one LLDPE component. This fraction may further contain lower contents (e.g. 0.1 to 5 wt%) of non-polyolefin polymer material and non-polymer material originally contained in the solid polymer material mixture. Preferably, the first polyolefin fraction (F1) contains only polyolefin material.

In order to minimize the content of non-polyolefin polymer material, a removal sub-process for extracting non-polyolefin polymers may be used, preferably between step A and step B1 of the process according to the invention, comprising the steps of:

F) contacting the solid polymer material mixture with a polar solvent, preferably a carbonyl-containing hydrocarbon, such as acetone, methyl iso-butyl ketone or methyl ethyl ketone, at a temperature in the range from 20 to 50 °C and atmospheric pressure (i.e. about 0.1 MPa abs.) for a period of from 5 min to 2 h to dissolve non-polyolefin polymer material; and

G) separating the non-polyolefin polymer material from the solid polymer material mixture.

By this removal process, preferably at least 90 wt%, more preferably at least 95 wt%, most preferably at least 97 wt% and up to 100 wt%, of non-polyolefin polymer material, based on the total content of the non-polyolefin material in the solid polymer material matrix, are separated from the solid polymer material mixture. Preferably, amorphous non-polyolefin polymer material is separated. More preferably, polar non-polyolefin polymer material is separated. Usually, initial water and salts are dissolved in step F and also separated from the solid polymer material mixture. Step G may be carried out by any conventional liquid/solid separation method (e.g. settling, filtration, centrifugation etc.). Accordingly, the content of polyolefin in the solid polymer material mixture is enhanced, preferably to at least 95 wt%, more preferably 97 wt% and possibly up to 100 wt% of polyolefin material, based on the total weight of the solid polymer material mixture. Preferably, polyolefin material is the only polymer material contained in the solid polymer material mixture.

A further advantage of this sub-process is the removal of impurities such as residual water, salts, waxes and fats from the solid polymer material mixtures.

The dissolution temperature used in step C1 generally depends on the content of the solid polymer material mixture, the solvent and the process conditions, such as pressure and dissolution time. Generally, the first dissolution temperature (T1) is in the range of 80 to 120 °C, preferably of 80 to 110 °C, more preferably of 80 to 100°C. Preferably, the dissolution temperature is between 5 to 30 °C, more preferably between 10 to 20 °C, below the melting point or range of the polyolefin dissolved in this fraction.

The invention is based on the knowledge that chemically similar materials (plastics) can be dissolved in chemically similar solvents, i.e. non-polar solvents interact preferably with non-polar materials. Furthermore, it is essential to bring the dissolvable polymer to a thermally higher level (for material softening, swelling and/or solvating the outer surface). Initial experiments indicated that the softening (solvating the outer surface) gets more effective by the application of temperatures close to the melting temperature of the polyolefin material. Furthermore low overpressures (i.e. up to 1.1 MPa abs., preferably up to 0.3 MPa abs.) support the penetration of the solvent into the surface and the outer (accessible) pore structure of the materials. It is regardless whether the overpressure is generated on thermal, hydraulic or overlaying (inert gas) way.

Generally, the first pressure (P1) is in the range of 0.1 to 1.1 MPa, preferably of 0.2 to 0.9 MPa, more preferably of 0.25 to 0.85 MPa and most preferably of 0.3 to 0.8 MPa. Preferably, a pressure above atmospheric pressure is used, which advantageously increases the dissolution kinetic and thus facilitates dissolution of the solid polymer material mixture. The used pressure is dependent from the vapor pressure of the solvent, being a function of temperature. Preferably, the pressure is defined by the vapor pressure of the respective solvent or solvent blend at the applied temperature. The above definition similarly applies to pressures P2, P3 and any further pressure of the dissolution steps. The pressures within the meaning of this disclosure are absolute pressures ("abs.").

The first dissolution time (M1) is generally from 5 min to 2 h, preferably from 10 min to 1.5 h and most preferably from 20 min to 1 h. Shorter dissolution times support more selective separation of polyolefin types from each other (such as PE from PP), however, the dissolution rates are sometimes lower if the equilibrium concentration is not reached.

Subsequently, and preferably directly after step C1, separating step D1 is performed, wherein the first undissolved material (U1) is separated from the first solution (S1). Generally, separation of undissolved material may be carried out by any conventional liquid/solid (L/S) separation technique. Preferably, the L/S separation is performed by gravity settling and/or filtration, preferably hot filtration at a temperature of not less than 30 °C below the melting range of the polyolefin type dissolved. Preferably narrow meshed sieve (< 250 $\mu$m) or a filter, preferably of metal or ceramic material, are used for the (hot solution) filtration. In a preferred embodiment a pre-coat filtration method is used for hot filtration, whereby the filter aid is preferably an inorganic or cellulose fiber material. In this embodiment, small sized particles (fillers), undissolvable pigments and other coloring agents dissolved in the first solution (S1) are also sufficiently separated from the hot solution (S1) by combination of depth filtration with adsorptive effects. The loaded inorganic filter aid material can be thermic-regenerated.

In one embodiment, preferably of the continuous process, the solvent/solution (S1) is removed from the (first) container (such as a first stirred tank) through a sieve, while the first undissolved material (U1) remains in the sieve (batch operation). Optionally, the first undissolved material (U1) is transferred to a second container (such as a second stirred tank), e.g. by means of a dewatering screw as the transferring aid. The first undissolved material (U1) may then be contacted with a solvent according to step B2 in the first container or in the second container, respectively.

Separating step E1 of the process is subsequently performed to separate the dissolved first polyolefin fraction (F1) from the solution (S1) to obtain a solidified first polyolefin fraction (F1). Preferably, the solidified polyolefin fraction (F1) is thereby separated from the solvent. A solidified first polyolefin fraction (F1) preferably has a content of less than 3 wt%, more preferably less than 2 wt%, still more preferably less than 1 wt% of solvent or other liquid components, and most preferably is free of solvent or other liquid components. The solvent may be recovered and optionally reused for further dissolution reactions.

Generally, separation from the solution (S1) may be carried out by any convention separation technique known in the art. Preferably, the separation is carried out by evaporation or flash devolatilisation of the solvent. Most preferably, the separation is carried out by pressure increase (pressure booster), preferably to a pressure in the range of 5 to 30 MPa, and subsequent flash devolatilisation of the solvent, preferably using a spray nozzle for disintegration. This can be performed by applying a 1-stage-pressure booster, i.e. by rapidly changing the pressure from (P1) to a pressure in the range of 5 to 30 MPa, in order to lower the required temperature for sufficient volatilization of the solvent and to adjust solvent contents in the separated and solidified first polyolefin fraction (F1) to less than 2,000 ppm, preferably less than 1,000 ppm and mostly preferably less than 500 ppm. The higher pressure before flash devolatilisation leads to extremely small sized (F1) polyolefin powders, which are high-surface-rich, supporting the heat exchange and thus low residual solvent contents can be achieved. Use of a spray nozzle enhances the surface of the particles, which in turn improves the heat transmission. Preferably, pressure booster/flash devolatilisation is carried out by a temperature of below 200 °C, such as in the range of (T1) to 180 °C, and most preferably around T2, and a pressure change from (P1) to a range of 9 to 20 MPa. Preferably, the solidified first polyolefin fraction (F1) is obtained as a precipitated or crystallized product after the separating step E1.

The first undissolved material (U1), separated in step D1, is then contacted with a non-polar solvent comprising at least one n-alkane comprising from 5 to 10 carbon atoms and mixtures thereof, in step B2, to form a second composition (C2) comprising the separated first undissolved material (U1) and the solvent. Preferably, the same solvent is used for steps B1 and B2.

The first undissolved material (U1) preferably comprises at least one polyolefin component originally contained in the solid polymer material mixture. Usually, the first undissolved material (U1) comprises from 1 to 9, preferably from 2 to 8, more preferably from 2 to 5 polyolefin components. Preferably, the first undissolved material (U1) comprises, or consists of, polyolefin components preferably selected from different types of polypropylene (PP) and polyethylene (PE), comprising isotactic, syndiotactic and atactic polypropylene and high density polyethylene (HDPE) and copolymers of these types of polyethylene and/or polypropylene.

The above description and embodiments provided with respect to step B1 similarly apply to step B2. Preferably, the ratio (wt/wt) of solvent to the first undissolved material (U1) is in the range of 3:1 to 20:1, more preferably 3:1 to 10:1 and most preferably 3:1 to 5:1, such as 4:1.

The subsequent heating step C2 is performed as described above with respect to the heating step C1, with the exception that the second composition (C2) is heated at a second dissolution temperature (T2) in the range of 90 to 160 °C, with the proviso that the second dissolution temperature (T2) is higher, preferably at least 5 °C, more preferably at least 10 °C, still more preferably at least 20°C, most preferably at least 30 °C and usually up to 40 °C, higher, than the first dissolution temperature (T1).

Generally, the second dissolution temperature (T2) is in the range of 90 to 160 °C, preferably of 90 to 150 °C, more preferably of 100 to 140°C and most preferably of 110 to 140°C. Preferably, the dissolution temperature is between 5 to 30 °C, more preferably between 10 to 20 °C, below the melting point or range of the polyolefin dissolved in this fraction.

In the heating step C2, a second solution (S2) comprising the solvent and a second polyolefin fraction (F2) is obtained, wherein the second polyolefin fraction (F2) is dissolved in the solvent, and, optionally, a second undissolved material (U2). Accordingly, a second polyolefin fraction (F2) is dissolved from the solid polymer material mixture (as the undissolved material (U1) originates from solid polymer material mixture). Generally, this fraction contains polyolefins with higher molar masses than the first polyolefin fraction (F1). Preferably, this fraction contains at least one HDPE component and/or at least one polypropylene component. In one particular embodiment, the second polyolefin fraction contains a (wt/wt) ratio of PP to HDPE of at least 75:25, preferably at least 80:20, more preferably at least 90:10 such as at least 95:5.

In the following, optionally, the second undissolved material (U2) - if present - is separated from the second solution (S2) in separating step D2 and the second polyolefin fraction (F2) is separated from the solvent of the second solution (S2) in separating step E2, to obtain a solidified second polyolefin fraction (F2). The above description and embodiments provided with respect to the steps D1 and E1 similarly apply to the steps D2 and E2. Separating step E2 is preferably performed by a pressure increase and flash devolatilisation, as described with respect to step E1, however, where (T2) and (P2) are the starting temperature or pressure, respectively.

Preferably, the solidified second polyolefin fraction (F2) is obtained as a precipitated or crystallized product after the separating step E2. The solidified second polyolefin fraction (F2) preferably has a content of less than 3 wt%, more preferably less than 2 wt%, still more preferably less than 1 wt% of solvent or other liquid components and most preferably is free of solvent or other liquid components. After the flash devolatilisation, the solvent content is less than 2,000 ppm, preferably less than 1,000 ppm and mostly preferably less than 500 ppm.

The second undissolved material (U2), if present, separated in step D2 may still contain polyolefin material. Thus, in one embodiment, the process additionally comprises a sequence of steps B3, C3, optionally, step D3, if third undissolved material (U3) is present after step C3, and step E3.

Accordingly, the second undissolved material (U2), separated in step D2, is then contacted with a non-polar solvent comprising at least one n-alkane comprising from 5 to 10 carbon atoms and mixtures thereof, in step B3, to form a third composition (C3) comprising the separated undissolved material (U2) and the solvent.

The second undissolved material (U2) may comprise at least one polyolefin component originally contained in the solid polymer material mixture. Preferably, the second undissolved material (U2) comprises from 1 to 5, preferably from 1 to 3, more preferably from 1 to 2 and most preferably only one polyolefin components. Preferably, the second undissolved material (U2) comprises, or consists of, polyolefin components preferably selected from different types of polypropylene (PP) and polyethylene (PE), comprising isotactic, syndiotactic and atactic polypropylene and high density polyethylene (HDPE) and copolymers of these types of polyethylene and/or polypropylene.

The above description and embodiments provided with respect to steps B1 and B2 similarly apply to step B3.

In this embodiment, the subsequent heating step C3 is performed as described above with respect to the heating step C1, with the exception that the composition (C3) is heated at a third dissolution temperature (T3) in the range of 100 to 180 °C, with the proviso that the third dissolution temperature (T3) is higher, preferably at least 5 °C, more preferably at least 10 °C, most preferably at least 15 °C and usually up to 40 °C higher, than the second dissolution temperature (T2).

Generally, the third dissolution temperature (T3) is in the range of 100 to 180 °C, preferably of 100 to 180 °C, more preferably of 110 to 180 °C, even more preferably of 120 to 180 °C and most preferably of 140 to 180 °C. Preferably, the dissolution temperature is between 5 to 30 °C, more preferably between 10 to 20 °C, below the melting point or range of the polyolefin dissolved in this fraction.

In the heating step C3, a third solution (S3) comprising the solvent and a third polyolefin fraction (F3) is obtained, wherein the third polyolefin fraction (F3) is dissolved in the solvent, and, optionally, a third undissolved material (U3). Accordingly, a third polyolefin fraction (F3) is dissolved from the solid polymer material mixture (as the second undissolved material (U2) originates from solid polymer material mixture). Generally, this fraction contains polyolefins with higher molar masses than the first and second polyolefin fractions (F1) and (F2). Preferably, this fraction contains at least one HDPE component and/or at least one polypropylene component.

In the following, the third undissolved material (U3) is separated from the third solution (S3) in separating step D3, if present, and the third polyolefin fraction (F3) is separated from the solvent of the solution (S3) in separating step E3, to obtain a solidified third polyolefin fraction (F3). The above description and embodiments provided with respect to the steps D1 and E1 similarly apply to the steps D3 and E3. Preferably, the solidified third polyolefin fraction (F3) is obtained as a crystallized product after the separating step E3.

In one particular embodiment, the second undissolved material (U2) is considered and used as the solidified third polyolefin faction (F3). In particular, if the second undissolved material (U2) suffice the requirements of physical properties, it may be directly used for product application.

The third undissolved material (U3), if present, and separated in step D3 may still contain polyolefin material. Thus, in a further embodiment of the process, the third undissolved material (U3) may be treated in a sequence of steps of B4, C4, optionally, step D4, if fourth undissolved material (U4) is present, and step E4, analogous to steps B3 to E3, however, with the exception that the fourth dissolution temperature (T4) is in the range of 110 to 180 °C, preferably, of 130 to 155 °C, with the proviso that the fourth dissolution temperature (T4) is higher, preferably at least 5 °C, more preferably at least 10 °C, most preferably at least 20 °C and usually up to 40 °C higher, than the third dissolution temperature (T3). Generally, the fourth polyolefin fraction (F4) contains polyolefins with higher molar masses than the polyolefin fractions (F1) to (F3).

In further embodiments, the process may additionally comprise at least one further sequence of steps B5 to E5, as described above for the steps B4 to E4, wherein the fifth dissolution temperature (T5) is in the range of 120 to 180 °C, with the proviso that the fifth dissolution temperature (T5) is higher, preferably at least 5 °C, more preferably at least 10 °C and usually up to 40 °C higher, than the fourth dissolution temperature (T4).

Preferably, the sequence of steps BX to EX (wherein X stands for any dissolution reaction from 6 to e.g. 10) is repeated for the remaining undissolved material, each sequence of steps being performed at an increased dissolution temperature in the range of 130 to 180 °C, wherein the increase in dissolution temperature from each sequence of steps BX to EX to the subsequent sequences of steps B(X+1) to E(X+1) is preferably at least 5 °C, more preferably at least 10 °C and usually up to 40 °C. Preferably, the sequence of steps BX to EX is repeated until all polyolefin material has been dissolved from the remaining undissolved material originating from the solid polymer material mixture.

In any of the contacting steps BX (wherein X stands for any dissolution reaction from 1 to e.g. 10), the solvent may be the same or different. Preferably, the solvent is the same in all BX steps. Most preferably, the solvent is recovered and optionally reused for all BX steps.

In one embodiment, the difference in temperature difference between the dissolution temperatures in the dissolution steps CX and C(X+1) vs C(X+1) and (C(X+2) (wherein X stands for any dissolution reaction from 1 to e.g. 10) is not more than 5 °C, preferably not more than 3 °C, and most preferably is 0, for all temperature differences of the process, i.e. meaning that the temperature enhancement from one fractionation step to another is performed in similar or identical intervals. In other words, the temperature difference between the steps C1 and C2 (e.g. being 10 °C) is not more than 5 °C, preferably not more than 3 °C different, and most preferably is similar, from the temperature difference between the steps C2 and C3 (e.g. being 10 +/- 5 °C).

In one preferred embodiment of the process, the first dissolution temperature (T1) is in the range of 80 to 110 °C, preferably 80 to 100 °C, and/or the second dissolution temperature (T2) is in the range of 100 to 150 °C, preferably 110 to 140 °C, and/or the third dissolution temperature (T3) is in the range of 140 to 180 °C.

The process may further comprise one or more additional steps or sub-processes that are different from steps A to G described above. Embodiments of the process comprising such additional steps are described in the following, wherein the embodiments may be combined in a further embodiment.

In one embodiment, the process further comprises a sup-process (H) of reducing the size by a pre-process such as grinding and/or crushing and/or shredding and/or sizing of the solid polymer material mixture to obtain particles of a size of less than 30 mm, preferably less than 20 mm and most preferably less than 10 mm, as determined by the sieve analysis described herein below. All these sub-processes are common processes well-known in the art. The sub-process (H) is carried out before step A.

In one embodiment, the process further comprises a sub-process (I) of enriching the polyolefin content of the solid polymer material mixture to comprise at least 75 wt% of at least polyolefin material, based on the total weight of the polymeric waste, by preferably at least one (advanced) mechanical processes. Such mechanical processes are common processes well-known in the art. The sub-process (I) is carried out before step A.

In a preferred embodiment, the process further comprises the sub-processes (H) and (I) comprising the dry unit operations in series, in particular, bale cutting, coarse shredding, coarse sieving, magnetic and electromagnetic separation, air and ballistic separation (2D/3D-plastic separation), NIR/VIS sorters (plastic type separation, PO-type-separation) and finally fine shredding to achieve an polyolefin enriched and surface enriched solid plastic material mixture with a particle size of less than 30 mm, preferably less than 20 mm and most preferably less than 10 mm, as determined by the sieve analysis described herein below.

In one embodiment, the process further comprises a step (J) of washing the solid polymer material mixture, in order to further enhance the polymer content. Washing processes are common processes well-known in the art. The sub-process (J) is carried out before step A.

In one embodiment, the process further comprises a step (K) of L/S separation of non-polymer material. L/S separation processes are common processes well-known in the art. The sub-process (K) is carried out before step A.

In one embodiment, the process comprises a sub-process (L) of decolorizing of any one of the polyolefin containing solutions (e.g. S1(F1), S2(F2), S3(F3)). Preferably, decolorizing is carried out by filtration via a metal sieve, ceramic filter or textile, containing an adsorption agent. Preferred adsorption agents are activated clay, bentonite and bauxite. A multilayer desorption bed of polar to non-polar adsorbents is preferred. The sub-process (L) is carried out after any or each of steps D1, D2 or D3, or is preferably implemented in any of steps D1, D2 or D3. The temperatures and pressures correspond to the respective dissolution temperatures and pressures.

In one embodiment, the process comprises a sub-process (M) of analyzing the content of any one of the polyolefin fractions. The analysis can be carried out by any conventional method such as FTIR, GPC-IR, TREF. Preferably the sub-process (M) is carried out after any or each of steps E1, E2 and E3.

In one particular embodiment, the process comprises the steps: A - F - G - B1 to D1 - L - E1 - B2 to D2 - optionally L - E2. Preferably, steps E1 and E2 are performed by a pressure booster and flash volatilization as described herein.

In another particular embodiment, the process comprises the steps: H - I, comprising the dry unit operations in series, as described above and before - A - F - G - B1 to D1 - L - E1 - B2 to D2 - optionally L - E2. Preferably, steps E1 and E2 are performed by a pressure booster and flash volatilization as described herein.

The present invention also relates to a polyolefin fraction, preferably a solidified polyolefin fraction, obtainable or obtained by the process of any one of the above embodiments.

Any one of the embodiments of the process according to the present invention described herein are also embodiments of the polyolefin fraction according to the invention.

In one particular embodiment of the polyolefin fraction, the (wt/wt) ratio of one polyolefin type to the other polyolefin type (e.g. PP to PE or PE to PP) in any one of the polyolefin factions, preferably one of the polyolefin fractions (F1), (F2) or (F3), is enhanced by a factor of at least 2, more preferably at least 4, even more preferably at least 6, most preferably at least 10, when compared to the respective (wt/wt) ratio of the solid polymer material mixture. Preferably, the (wt/wt) of polypropylene in a polyolefin fraction is enhanced by the above factor. More preferably, the (wt/wt) ratio of polypropylene in a polyolefin fraction obtained at a dissolution temperature in the range of 110 to 140 °C (e.g. F2) is enhanced by the above factor.

In another particular embodiment of the polyolefin fraction, the (wt/wt) ratio of PP to PE or PE to PP (preferably PP to PE) is at least 3:1, preferably at least 4:1, more preferably at least 5:1 such as at least 10:1, in any one of the polyolefin factions, preferably one of the polyolefin fractions (F1), (F2) or (F3).

The present invention also relates to the use a polyolefin fraction of any of the above embodiments of the polyolefin fraction in the manufacture of an article. Preferred articles are injection molding and compounding articles, e.g. functional caps and helmets, bottles, spray pumps, lids, boxes, laundry tubs, containers, pails, films for packaging of non-food applications, sophisticated rigid packaging solutions, compounds for automotive applications and pipe materials.

In the following, the invention will further be illustrated by way of examples which refer to the following figures:

Figure 1 (encompassing Figures 1A and 1B) illustrates a discontinuously operated process according to one embodiment of the present invention.

Figure 2 illustrates a continuously operated process according to one embodiment of the present invention.

Figure 3 illustrates a further continuously operated process according to one embodiment of the present invention using Rotating Disc Contactors (RDC).

Figure 4 shows the results obtained for the relative polyolefin recovery rate for the PP-regrind basic material as function of the dissolution temperature and used non-polar solvent.

Figure 5 shows the results obtained for the relative polyolefin recovery rate for the PP-regrind basic material at 130 °C in n-decane as function of the contacting time.

Figure 6 shows the results obtained for molar mass distribution of technically pure PP material (PCW-source) at 130 °C in different non-polar solvents.

Figure 7 shows photographs of obtained solidified polyolefin fractions.

Figure 8 shows the results obtained for the polymer removal rate from different polymer materials in polar and non-polar solvents at 40 °C.

Figure 9 visualizes the molecular weight dependence of the fractions of the PP-regrind basic material and pure PP material from the dissolution temperature.

Figure 10 visualizes the dependence of molecular weight and polydispersity index of the fractions of the technically pure PP material (PCW-source) from the dissolution temperature.

Figure 11 visualizes the $MFR_2$ dependence of the fractions of the technically pure PP material (PCW-source) from the dissolution temperature.

Figure 12 visualizes the dependence of intrinsic viscosity of the fractions of the technically pure PP material (PCW-source) from the dissolution temperature.

**Methods**

The following definitions of terms and measurement and determination methods apply to the above general description of the invention as well as to the below examples.

a) Melt Flow Rate MFR

The melt flow rate (MFR) is described and generally determined according to ISO 1133 and indicated in g/10 min. The higher the melt flow rate, the lower the viscosity of the polymer. The MFR is determined at 190 °C for polyethylene and at 230 °C for polypropylene and polypropylene/polyethylene mixtures, at a loading of 2.16 kg ($MFR_2$), 5.00 kg ($MFR_5$) or 21.6 kg ($MFR_{21}$).

In the experiments of the present invention, the MFR (at 230 °C, at a loading of 2.16 kg ($MFR_2$)) was determined from the measured values for the weight average molecular weight ($M_w$) (which were obtained as described below). From the $M_w$ values the $MFR_2$ can be estimate using the following correlation: log ($MFR_2$) = -3,4756 * log($M_w$) +18.784 (according to M. Zahedi, M. Ahmadi, M. Nekoomanesh, J. Appl. Polym. Sci, 2008, 108, 3565-3571).

b) Transmission InfraRed spectroscopy

Determination of the "iPP", "PVC", "PA", "PET", "PS" and "PE" amount was determined by Transmission InfraRed spectroscopy.

Sample preparation:

All calibration samples and samples to be analyzed are prepared in similar way, on molten pressed plates.

2 to 3 g of compounds to be analyzed are molten at 190°C curve, 20 seconds under 60 to 80 bar pressure, in an hydraulic heating press and cooled down to room temperature during 40 second in a cold press under the same pressure, in order to control the morphology of the compound. The thickness of the plates are controlled by metallic calibrated frame plates 2,5 cm by 2,5 cm, 100 to 200 μm thick (depending MFR from the sample); two plates are produced in parallel at the same moment and in the same conditions. The thickness of each plate is measured before any FT IR measurements; all plates are between 100 to 200 μm thick.

To control the plate surface and to avoid any interference during the measurement, all plates are pressed between two double-sided silicone release papers.

In case of powder samples or heterogeneous compounds, the pressing process would be repeated three times to increase homogeneity by pressed and cutting the sample in the same conditions as described before.

Spectrometer:

Standard transmission FTIR spectroscope such as Bruker Vertex 70 FTIR spectrometer is used with the following set-up:

- a spectral range of 4000-400 $cm^{-1}$,
- an aperture of 6 mm,
- a spectral resolution of 2 $cm^{-1}$,
- with 16 background scans, 16 spectrum scans,
- an interferogram zero filling factor of 32
- Norton Beer strong apodisation.

Spectrum are recorded and analysed in Bruker Opus software.

Calibration samples:

As FTIR is a secondary method, several calibration standards were compounded to cover the targeted analysis range, typically from:

- 0,2 wt% to 2,5 wt% for PA
- 0,1 wt% to 5 wt% for PS

- 0,1 wt% to 5 wt% for PET
- 0,1 wt% to 4 wt% for PVC

The following commercial materials were used for the compounds: Borealis HC600TF as iPP, Borealis FB3450 as HDPE and for the targeted polymers such RAMAPET N1S (Indorama Polymer) for PET, Ultramid® B36LN (BASF) for Polyamide 6, Styrolution PS 486N (Ineos) for High Impact Polystyrene (HIPS), and any commercial PVC.

All compounds are made at small scale in a Haake kneader at a temperature below 265°C and less than 10 minutes to avoid degradation.

Additional antioxidant such as Irgafos 168 (3000 ppm) is added to minimise the degradation.

Calibration:

The FTIR calibration principal is the same for all the components: the intensity of a specific FTIR band divided by the plate thickness is correlated to the amount of component obtained from gravimetric amount added during compounding.

Each specific FTIR absorption band is chosen due to its intensity increase with the amount of the component concentration and due to its isolation from the rest of the peaks, whatever the composition of the calibration standard and real samples.

This methodology is described in the publication from Signoret and al. "Alterations of plastic spectra in MIR and the potential impacts on identification towards recycling", Resources, conservation and Recycling journal, 2020, volume 161, article 104980.

The wavelength for each calibration band is:

- $3300 \text{ cm}^{-1}$ for PA,
- $1601 \text{ cm}^{-1}$ for PS,
- $1409 \text{ cm}^{-1}$ for PET,
- $615 \text{ cm}^{-1}$ for PVC,
- $1167 \text{ cm}^{-1}$ for iPP.

For each polymer component i, each calibration correlation is the following:

$$xi = Ai.\frac{Ei}{d} + Bi$$

where $x_i$..is the fraction amount of the polymer component i (in wt%)

$E_i$ is the absorbance intensity at the polymer component i specific band (in a.u. absorbance unit), respectively at $3300 \text{ cm}^{-1}$ for PA, $1601 \text{ cm}^{-1}$ for PS, $1409 \text{ cm}^{-1}$ for PET, $615 \text{ cm}^{-1}$ for PVC, $1167 \text{ cm}^{-1}$ for iPP

D is the thickness of the sample plate

$A_i$ and $B_i$ are two coefficients of correlation determined for each calibration curve

No specific isolated band can be found for PE and as consequence,

$$X_{PE} = 100 - (X_{iPP} + X_{PA} + X_{PS} + X_{PET} + X_{PVC})$$

where 100 stands for the amount of polymer in the sample.

For each calibration standard, the amount of each component is obtained from the gravimetric amount added during compounding.

c) Determination of soluble fraction and intrinsic viscosity (IV) and ethylene content of sample and crystalline (CF) and soluble fraction (SF)

The crystalline (CF) and soluble fractions (SF) of the polyolefin compositions as well as the ethylene content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (IV) an online 2-capillary viscometer is used.

IR4 detector is a multiple wavelength detector measuring IR absorbance at two different bands (CH3 stretching vibration (centred at app. 2960 cm$^{-1}$) and the CH stretching vibration (2700-3000 cm$^{-1}$) that are serving for the determination of the concentration and the Ethylene content in Ethylene-Propylene copolymers. IR4 detector is calibrated with series of 8 EP copolymers with known Ethylene content in the range of 2 wt% to 69 wt% (determined by 13C-NMR) and each at various concentrations, in the range of 2 and 13mg/ml. To encounter for both features, concentration and ethylene content at the same time for various polymer concentration expected during Crystex analyses the following calibration equations were applied:

$$Conc = a + b*Abs(CH) + c*(Abs(CH))^2 + d*Abs(CH_3) + e*(Abs(CH_3)^2 + f*Abs(CH)*Abs(CH_3) \qquad \text{(Equation 1)}$$

$$CH_3/1000C = a + b*Abs(CH) + c* Abs(CH_3) + d * (Abs(CH_3)/Abs(CH)) + e * (Abs(CH_3)/Abs(CH))^2 \qquad \text{(Equation 2)}$$

The constants a to e for equation 1 and a to f for equation 2 were determined by using least square regression analysis.
The $CH_3/1000C$ is converted to the ethylene content in wt% using following relationship:

$$wt\% \text{ (ethylene in EP copolymers)} = 100 - CH_3/1000TC * 0.3 \qquad \text{(Equation 3)}$$

Amount of soluble fraction (SF) and crystalline fraction (CF) are correlated through the XS calibration to the "Xylene Cold Soluble" (XCS) quantity and respectively Xylene Cold Insoluble (XCI) fractions, determined according to standard gravimetric method as per IS016152. XS calibration is achieved by testing various EP copolymers with XS content in the range 2-31 wt%. The determined XS calibration is linear:

$$wt\% \text{ XS} = 1,01* wt\% \text{ SF} \qquad \text{(Equation 4)}$$

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$IV \text{ (dL/g)} = a* Vsp/c \qquad \text{(Equation 5)}$$

The samples to be analyzed are weighed out in concentrations of 10mg/ml to 20mg/ml. To avoid injecting possible gels and/or polymers which do not dissolve in TCB at 160°C, like PET and PA, the weighed out sample was packed into a stainless steel mesh MW 0,077/D 0,05mm.
After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 400rpm. To avoid sample degradation, polymer solution is blanketed with the N2 atmosphere during dissolution.
A defined volume of the sample solution is injected into the column filled with inert support where the crystallization of the sample and separation of the soluble fraction from the crystalline part is taking place. This process is repeated two times. During the first injection the whole sample is measured at high temperature, determining the IV [dl/g] and the C2 [wt%] of the PP composition. During the second injection the soluble fraction (at low temperature) and the crystalline fraction (at high temperature) with the crystallization cycle are measured (wt% SF, wt% C2, IV).

d) GPC

Molecular weight (Molar mass) averages ($M_z$, $M_w$ and $M_n$), molecular weight distribution (MWD) and its broadness, described by polydispersity index, PDI= Mw/Mn (wherein $M_n$ is the number average molecular weight and $M_w$ is the weight average molecular weight) are determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i x\, M_i)}{\sum_{i=1}^{N} A_i} \quad (2)$$

$$M_z = \frac{\sum_{i=1}^{N} (A_i\, x\, M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain)) or differential refractometer ((RI from Agilent Technologies, equipped with 3 x Agilent-PLgel Olexis and 1x Agilent-PLgel Olexis Guard columns) was used. As mobile phase 1,2,4-trichlorobenzene (TCB) stabilized with 250 mg/L 2,6-Di tert-butyl-4-methyl-phenol) was used. The chromatographic system was operated at column temperature of 160 °C and detector at 160 °C and at a constant flow rate of 1 mL/min. 200 µL of sample solution was injected per analysis. Data collection was performed using either Agilent Cirrus software version 3.3 or PolymerChar GPC-IR control software.

The column set was calibrated using 19 narrow MWD polystyrene (PS) standards in the range of from 0.5 kg/mol to 11 500 kg/mol. The PS standards were dissolved at room temperature over several hours. The conversion of the polystyrene peak molecular weight to polyolefin molecular weights is accomplished by using the Mark-Houwink equation and the following Mark-Houwink constants:

$$K_{PS} = 19 \times 10^{-3} \text{ mL/g}, \quad \alpha_{PS} = 0.655$$

$$K_{PE} = 39 \times 10^{-3} \text{ mL/g}, \quad \alpha_{PE} = 0.725$$

$$K_{PP} = 19 \times 10^{-3} \text{ mL/g}, \quad \alpha_{PE} = 0.725$$

A third order polynomial fit was used to fit the calibration data.

All samples were prepared in the concentration range of around 1 mg/ml and dissolved at 160 °C for 3 (three) hours in fresh distilled TCB stabilized with 250 ppm Irgafos168 under continuous gentle shaking.

e) TREF analysis

The chemical composition distribution was determined by analytical Temperature Rising Elution fractionation as described by Soares, J.B.P., Fractionation, In: Encyclopedia Of Polymer Science and Technology, John Wiley & Sons, New York, pp. 75-131, Vol. 10, 2001. The separation of the polymer in TREF is according to their crystallinity in solution. The TREF profiles were generated using a CRYSTAF-TREF 200+ instrument manufactured by PolymerChar S.A. (Valencia, Spain).

The polymer sample was dissolved in 1,2,4-trichlorobenzene (TCB, stabilized with 250 mg/L 2,6-Di tert butyl-4-methyl-phenol) at a concentration between 1,5 and 2,0 mg/ml at 150 °C for 180 min and 1.8 mL of the sample solution was injected into the column (8 mm inner diameter, 15 cm length, filled with inert e.g. glass beads). The column oven was then rapidly cooled to 110 °C and held at 110 °C for 30 min for stabilization purpose and it was later slowly cooled to 35°C under a constant cooling rate (0.1 °C/min). The polymer was subsequently eluted from the column with 1,2,4-trichlorobenzene (stabilized with 250 mg/L 2,6-Di tert butyl-4-methyl-phenol) at a flow rate of 0,5 mL/min at 35 °C for a period of 10 min followed by a temperature increase from 35 °C to 135 °C at a constant heating rate of 0.5 °C/min with a flow rate of 0,5 ml/min. The concentration of the polymer during elution was recorded by an infrared detector (measuring the C-H absorption at 3.5 micrometer wavelength). The detector response was plotted as a function of the temperature. The normalized concentration plot was presented as fractogram together with the cumulative concentration signal normalized to 100.

Definition of analyzed fractions:

The HDPE fraction is the amount in wt% of the polymer fraction with will elute between 90 °C and 100 °C elution temperature, which mainly contains the homo-polyethylene chains or chains with a very low branching content.
The LDPE/LLDPE fraction is than the amount in wt% of the polymer fraction with elutes between 35 and 90 °C, where the soluble fraction SF is the polymer eluting with the purge fraction at 35 °C.
The PP fraction are eluting from 100 °C onwards and can be separated into the Random EP copolymer fraction with an elution temperature range from 100 to 105 °C, where the i-PP fraction refers to polymer fractions eluting above 105 °C.

**f)** Melting temperature

Melting temperature of the polymers and polymer mixtures is determined according to ISO 3146:2000 by differential scanning calorimetry (DSC).

**g)** Ash content

Thermogravimetric Analysis (TGA) experiments were performed with a Perkin Elmer TGA 8000. Approximately 10-20 mg of materials were placed in a platinum pan. The temperature was equilibrated at 50 °C for 10 minutes, and afterwards raised to 950 °C under nitrogen at 20 °C/min. The ash content was evaluated as the wt% at 850 °C, based on the total weight of the used starting material.

**h)** Quantification of microstructure by NMR spectroscopy

Quantitative nuclear-magnetic resonance (NMR) spectroscopy was used to quantify the ethylene content of the polymers.
Quantitative $^{13}C\{^1H\}$ NMR spectra were recorded in the solution-state using a Bruker Avance Neo 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in approximately 3 ml of *1,2*-tetrachloroethane-$d_2$ (TCE-$d_2$) along with approximately 3 mg BHT (2,6-di-tert-butyl-4-methylphenol CAS 128-37-0) and chromium-(III)-acetylacetonate (Cr(acac)$_3$) resulting in a 60 mM solution of relaxation agent in solvent as described in G. Singh, A. Kothari, V. Gupta, Polymer Testing 2009, 28(5), 475.
To ensure a homogenous solution, after initial sample preparation in a heat block, the NMR tube was further heated in a rotary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6k) transients were acquired per spectra.
Quantitative $^{13}C\{^1H\}$ NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.
Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer:

$$fE = E / ( P + E )$$

The comonomer fraction was quantified using the method of W-J. Wang and S. Zhu, Macromolecules 2000, 33 1157, through integration of multiple signals across the whole spectral region in the $^{13}C\{^1H\}$ spectra. Integral regions were slightly adjusted to increase applicability across the whole range of encountered comonomer contents.

The mole percent comonomer incorporation was calculated from the mole fraction:

$$E \ [mol\%] = 100 * fE$$

The weight percent comonomer incorporation was calculated from the mole fraction:

$$E \ [wt\%] = 100 * ( \ fE * 28.06 \ ) \ / \ ( \ (fE * 28.06) + ((1-fE) * 42.08)$$

**i)** Particle size determination

Particle sizes, in particular particle sizes of the solid polymer material mixtures, are determined by classifying (dry) sieve analysis, sieving performed as described in DIN 66165 (in particular, DIN 66165-2 describing the analysis method), e.g. using sieves according to ISO 565 with nominal aperture sizes of 31.5, 22.4 and 11.2 mm. The particle sizes are preferably D90 particle sizes.

**Examples**

Materials

The investigated solid polymer material mixtures (PMM) were rigid, multi-colored particles (flakes) with sizes of 5 to 20 mm. The samples were received from a mechanical pre-treatment plant (labelled as "PP-regrind basic material" and "PE-regrind basic material"). They originated from the Green Point System (GER), and were pre-treated (shredded, washed and dried).

Hand-sorted technically pure polymer types from post-consumer waste sources (PCW-source - labeling PP, PE, HDPE and PS, and PVC) were used for some experiments (in particular to investigate pre-treatment processes), investigated after shredding and generating particle (flake) sizes of 3 to 20 mm.

The materials used in the examples are shown in Tables 1 to 4, wherein all percentage are weight percentages based on the total weight of the respective sample.

Table 1: Solid polymer materials - compositions.

| PP-regrind basic material (multi-colored) | | PE-regrind basic material (multi-colored) | |
|---|---|---|---|
| Flake size | 5 - 20 mm | Flake size | 5 - 20 mm |
| PE | ca. 41 % | PE | ca. 62 % |
| PP | ca. 53 % | PP | ca. 34 % |
| EVA<br>PA<br>PS | 1.7 %<br>0.3 %<br>0.5 % | EVA<br>PA | 1.2 %<br>0.5 % |
| Others | Talc, Chalk, Ca-stearate, TiO$_2$, Pigments, Metals, Wood | Others | Talc, Chalk, Ca-stearate, TiO$_2$, Pigments, Metals, Wood |

Table 2: Add-on polymer materials.

| Polymer-add label | CAS-No. | Purity | Source |
|---|---|---|---|
| PE | 9002-88-4 | techn. pure | PCW |
| HDPE | 9002-88-4 | techn. pure | PCW |
| PP | 9003-07-0 | techn. pure | PCW |
| PVC | 9002-86-2 | techn. pure | Water pipe |

(continued)

| Polymer-add label | CAS-No. | Purity | Source |
|---|---|---|---|
| PS | 9003-53-6 | techn. pure | PCW |

Table 3: Solvents used in the experiments.

| Solvent | CAS-No. | Purity | Boiling point [°C] |
|---|---|---|---|
| n-Hexane | 110-54-3 | ≥ 99 % | 69 |
| n-Octane | 111-65-9 | ≥ 95 % | 125 |
| n-Decane | 124-18-5 | techn. pure | 174 |
| Acetone | 67-64-1 | ≥ 98 % | 56 |
| Methyl ethyl ketone (MEK) | 78-93-3 | ≥ 99.5 % | 79 |

Table 4: Decolorizing agents and filter element.

| Material | CAS-No. | Grain size |
|---|---|---|
| Activated Carbon | 7440-44-0 | 2,400 μm |
| Bentonite | 1302-78-9 | 100-300 μm |
| **Filter Element** | | |
| Fine Filter CJC 15/12, cellulose fiber patron, cut-off 1-3 μm | | |

Dissolution of solid polymer materials in different non-polar solvents

Dissolution experiments were carried out with different non-polar solvents at different dissolution temperatures under atmospheric pressure, to investigate dissolution properties of solid polymer material mixtures. The test equipment set-up, the test procedure and the analytical preparation were similar to the multistage dissolution experiments with n-decane, as described below. The investigated solid polymer material mixtures were PP-regrind basic material and PE-regrind basic material (Table 1). The investigated non-polar solvents were n-hexane, n-heptane, n-octane and n-decane (Table 2). The whole process was a 1-stage process comprising heating up the liquid slurry (PMM + solvent) to the set-point temperature and contacting the slurry for 120 min, separation and sample preparation for analytic measurement.

*Relative polyolefin recovery rate*

Relative polyolefin recovery rate as function of used non-polar solvent and dissolution temperature was calculated as follows:

$$Relative\ polyolefin\ recovery\ rate\ [\%] = \frac{Polyolefin\ mass\ determined\ in\ solution}{Polyolefin\ mass\ in\ PMM\ (feedstock)} * 100$$

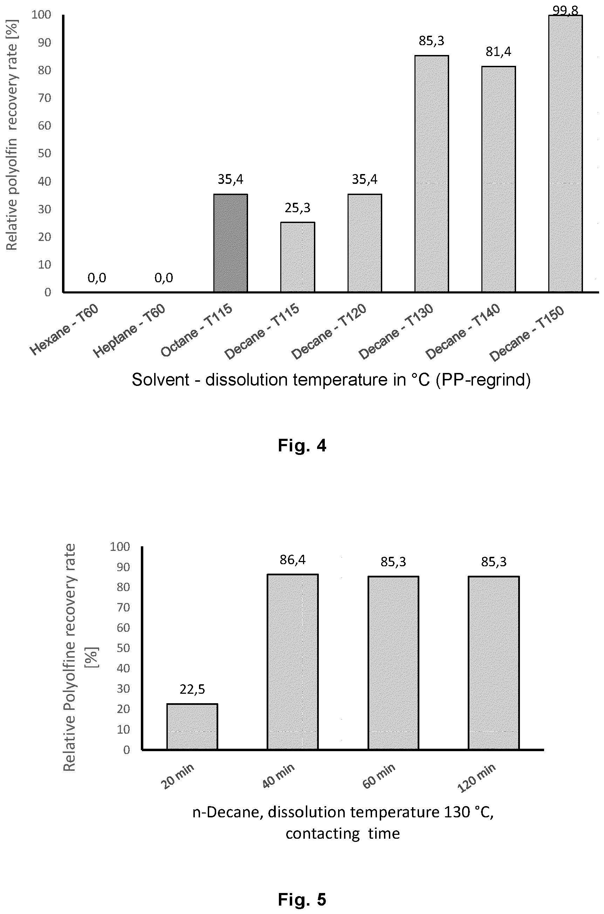

The obtained results for the PP-regrind material are shown in Figure 4. No dissolution occurred at dissolution temperatures of 60 °C for all investigated non-polar solvents. Initial dissolution can be recognized for temperatures about 100 °C (corresponding to LDPE/EPR of S1 (F1), as shown below). Remarkable recoverable polyolefin rates (> 75 %) can be recognized within the temperature range of 110 to 140 °C (containing additionally i-PP, HDPE of S2(F2), as shown below) and practically full recovery of the initial polyolefin content occurs at temperatures of equal and more than 150 °C (containing additionally HDPE of U2, S3(F3), as shown below).

Regardless of their chain length, the investigated n-alkanes show principally a similar dissolution behavior, whereby a comparable polyolefin recovery rate is obtained at slightly lower dissolution temperature by applying smaller n-alkanes (e.g. n-octane (115 °C) versus n-decane (120 °C)) - probably because of increased permeation into the gel zone during dissolving.

Further kinetic dissolution experiments confirmed, that already after a contacting time of 40 min the equilibrium polyolefin dissolution concentration for the dissolution temperature 130 °C for PP-regrind basic material in n-decane and atmospheric pressure is achieved (as shown in Figure 5). The dissolution kinetic can be analytical described as law of 1st order.

Comparable results were obtained for the PE-regrind basic material (data not shown).

*Molar mass distribution*

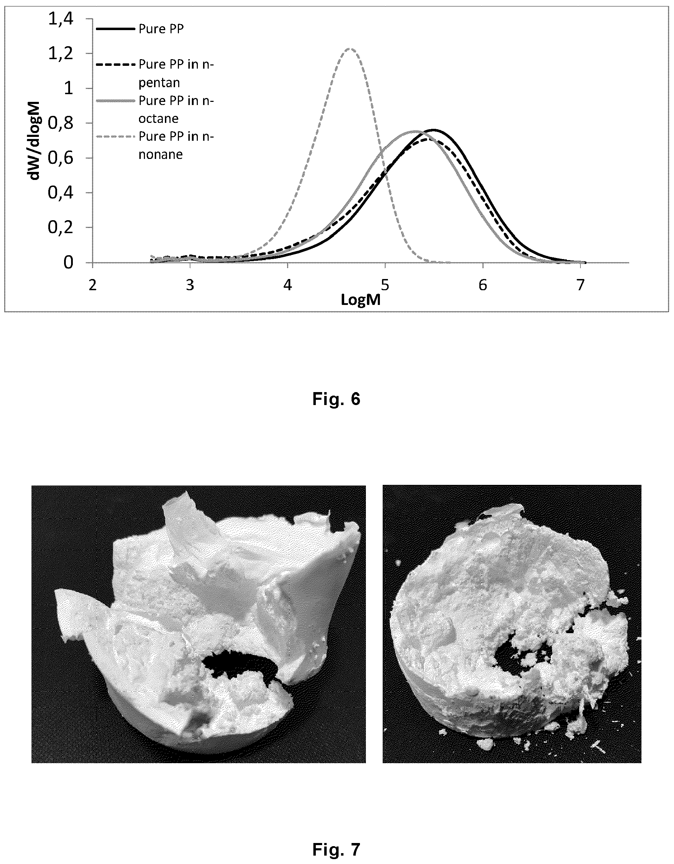

Molar mass (molecular weight) distribution was investigated as a function of used non-polar solvent. Technically pure PP from PCW-source (Table 2) was dissolved in a 1-stage process in different solvents at atmospheric pressure and a temperature of 130 °C, as described above for the PP-regrind basic material, in different non-polar solvents. Molar mass distribution was determined as described in the method section. The results are shown in Figure 6. Accordingly, molar mass distribution depends from the used solvent, wherein n-nonane shows an enormous left-shift and narrower molar mass distribution when compared to n-octane or n-pentane.

Dissolution of polyolefin and non-polyolefin polymer materials in different organic polar and non-polar solvents

The dissolution behavior of technically pure polyolefin polymers, non-polyolefin polymers and solid polymer material mixtures was investigated with different solvents at a temperature of 40 °C and atmospheric pressure. The investigated solid polymer material mixtures were PP-regrind basic material and PE-regrind basic material (Table 1), polyolefin polymer / technically pure PP and non-polyolefin polymer / PVC. Both PP-regrind (ca. 2.5 wt%) and PE-regrind (ca. 1.7 wt%) basic materials contain non-polyolefin polymers such as EVA, PA and PS. The investigated non-polar solvent was n-hexane, the polar solvents were acetone and methyl ethyl ketone (MEK).

For the experiments, a Soxhlet apparatus was used. The solid material was placed within a compact sleeve (cellulose fiber) on the top of the Soxhlet apparatus, forming the extraction chamber. The sleeve was filled with the solid material (ca. 20 g). The solvent in the bottom glass flask (solvent chamber) was heated up to the boiling point of the applied solvent and thus solvent vapor was generated. After passing the vapor tube, the evaporated solvent was condensed in the cooler at the top of the apparatus and dropped down on the solid material within the sleeve. Extraction chamber temperature was adjusted to 40 °C. When the extraction chamber was filled to a certain level (overlaying the solid material), the polymer containing solution flushed back to the solvent chamber via the siphon. Thus, the extraction chamber was periodically filled and discharged and the solid material was always contacted with fresh solvent. Drop rate from the cooler was roughly 2-3 drops per second. Total contacting time was 18 h. After the test runs, the remaining solid material in the sleeve was dried at 105 °C for 24 h and the solvent was completely removed from the polymer containing solution over a vacuum-desiccator for 24 h at 4000 Pa at 80 °C. Solidified and dry materials were weight-analyzed and the weight percentage of the dissolved (e.g. removed) polymer material was calculated based on the total weight of the starting material.

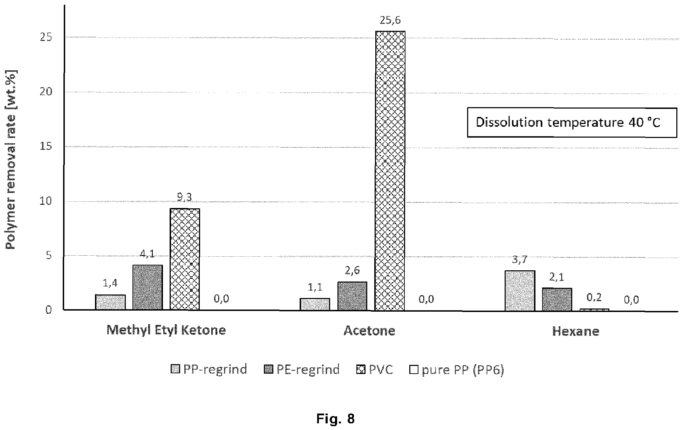

The obtained results are shown in Figure 8. As can be seen, non-polyolefin polymer PVC can be sufficiently dissolved/removed by the organic polar solvents, acetone and MEK, whereby n-hexane cannot dissolve PVC. For the technically pure PVC sample, a dissolution rate of more than 9 wt% and more than 25 wt% in the polar solvents was reached. These percentages are believed to reflect the equilibrium concentrations of the respective solvents. Furthermore, none of the organic polar solvents or n-hexane dissolves pure PP at 40 °C. However, organic polar solvents also sufficiently dissolve non-polyolefin polymers such as PS, PMMA and EVA besides PVC. Accordingly, these organic polar solvents are especially suitable to remove non-polyolefin polymers from polymer mixtures to enrich the polyolefin content. A further advantage can be found in the removal of disturbing impurities such as residual water, salts, waxes and fats within solid polymer material mixtures.

Multistage molar mass-fractionated dissolution of solid polymer material mixtures in n-decane

For the multistage (molar mass-fractionated) dissolution experiments under atmospheric pressure, a stirred tank cascade was simulated using a glass lab flask (250 ml) with a straight bottom. The lab device featured a reflux cooler, so that eventually generated n-decane vapors were re-drained to the dissolution zone. The solid polymer material (PP-regrind basic material) was introduced into a cage construction (ca. 24 g, starting material) with 3 steel legs to guarantee a distance of the cage to the straight bottom of the glass lab flask (ca. 30 mm). Latter allowed the agitation over a bottom positioned magnetic stirrer. The cage was formed to a top-opened cylinder by a thin 100 μm mesh grid, so that the undissolvable material remained in the cage. The pre-warmed solvent n-decane was added (ca. 125 g) and the stirred tank was heated up to the dissolution temperature T1 (and further T2-T5). The dissolution was executed for 120 min/stage (M1-M5). After the dissolution step, the polymer containing hot solution (S1-S5) was decanted and fine filtrated over a heatable glass/ceramic filter tube element by addition of a filter aid (cellulose fiber). The hot filtered polyolefin containing solution (S1-S5) was cooled down to ambient temperature under precipitation of the polyolefin fraction (S1(F1)-S5(F5)). The transparent solvent was decanted, the slurry was filtered and the filtercake (F1-F5) was dried to remove the residual solvent. The solidified polyolefin fractions (F1-F5) appeared as white polyolefin filtercake. Solidified and dried fractions (F1-F5) were weight-analyzed. The undissolved material (U1-U5) in the cage was dried and re-weighted and positioned in the glass flask for the following dissolution experiment, whereby fresh solvent (ca. 125 g) was added and the experimental procedure repeated for the test series T2-T5. All solidified material fractions (F1-F5) were analyzed for the polyolefin composition. The full test run program was executed twice.

*Dissolution rate*

The average dissolution rate percentages (wt/wt) obtained for the PP-regrind basic material in n-decane per dissolution stage at the different conditions are shown in Table 5.

Table 5: Weight percentage of dissolved fractions in n-decane.

| Fraction no. | Dissolution temperature T1-T5 [°C] | Pressure P1-P5 [MPa] | Residence time M1-M5 [min] | Undissolved material U1-U5 [g] | Dissolution rate [wt%] |
|---|---|---|---|---|---|
| 1 | 100 | | 120 | 22.2 | 4.6 |
| 2 | 120 | | 120 | 12.5 | 41.9 |
| 3 | 130 | 0.1 (atm.) | 120 | 8.0 | 19.2 |
| 4 | 150 | | 120 | 4.3 | 15.7 |
| 5 | 170 | | 120 | 1.8 | 10.7 |
| Total polyolefin recovery rate | | | | | 92.1 $\pm$ 2.4 |

The total polyolefin recovery rate of all fractions of 92.1 $\pm$ 2.4 wt% correlates with the feedstock polyolefin content of ca. 94 wt% in the feedstock solid polymer material mixture "PP-regrind basic material", so that the polyolefin material has been recovered quantitatively.

*Appearance*

Figure 7 shows photographs of the recovered materials of Fraction 2 (120 °C, F2, left photograph) and Fraction 3 (130 °C, F3, right photograph). Both samples were recovered as white solid material.
Surprisingly, it was observed that the separated solvent remained colorless and transparent, whereby color pigments were enriched (color-intensification) in the remaining undissolved material per dissolution stage (U1-U5). Finally the color pigments remained in the non-dissolvable inorganic filler/additives mixture.

*Content of fractions*

Multistage (molar mass-fractionated) dissolution experiments were performed for the PP-regrind basic material, as described above, however with slightly changed dissolution temperatures for the fractions. The solidified polyolefin fractions (F1-F5) and the undissolved material at 170 °C (U5) were analyzed for their contents by FTIR (Table 6, for the C2 and C3 content) and TREF method (Table 7), as described in the method section. The melting temperatures of the PE and PP peaks were determined via DSC (Table 6), as described in the method section.

Table 6: Content of the fractions (FTIR, DSC analysis).

| Fraction no. | T1-T5 [°C] | C2 in [wt%] | C3 in [wt%] | Tm (PE) [°C] | Tm (PP) [°C] | Predominant polyolefin type |
|---|---|---|---|---|---|---|
| 1 | 100 | 68.4 | 29.7 | 106.7 | 139.0 | LDPE/LLDPE-(EPR/HDPE) |
| 2 | 120 | 32.4 | 67.3 | 130.1 | 162.6 | i-PP/(HDPE) |
| 3 | 130 | 37.2 | 62.54 | 131.3 | 164 | |
| 4 | 150 | 33.6 | 66 | 130.8 | 163 | |
| 5 | 170 | 40.4 | 59.2 | 131.2 | 163.5 | |

(continued)

| Fraction no. | T1-T5 [°C] | C2 in [wt%] | C3 in [wt%] | Tm (PE) [°C] | Tm (PP) [°C] | Predominant polyolefin type |
|---|---|---|---|---|---|---|
| U5 | | 77.1 | 22.9 | | | HDPE/(i-PP) |

Correlation of the melting temperatures and the C2/C3 contents in Table 6 indicates that Fraction 1 predominantly contains LDPE and/or LLDPE. In Fractions 2 to 5, the predominant polyolefin is i-PP, while the undissolved material (U5) contains mostly HDPE. (EPR stands for ethylene propylene rubber.)

Table 7: Content of the fractions (TREF analysis [wt%]).

| Fraction no. | T1-T3 [°C] | SF (n.a) | LDPE/ LLDPE | HDPE | Random EP | i-PP |
|---|---|---|---|---|---|---|
| 1 | 100 | 16.8 | 68.4 | 11.8 | 1.5 | < 0,1 |
| 2 | 120 | 4.6 | 21.9 | 40.8 | - | 32.7 |
| 3 | 130 | 8.8 | 17.7 | 45.0 | - | 28.5 |

Also the TREF analysis reveals that the fraction have different contents of polyolefin types. Almost no i-PP (semicrystalline isotactic propylene) is present in Fraction 1. This fraction may be used if a polyolefin with high LDPE/LLDPE content is to be provided, where the presence of polypropylene is to be avoided. At higher temperatures, the polypropylene content increases, as well as the HDPE content.

*Intrinsic viscosity*

Intrinsic viscosity (IV) of the obtained fractions was determined by the "Crystex analysis", as described in the method section. The results are summarized in Table 8, wherein increase of IV can be observed with increased dissolution temperature.

Table 8: Intrinsic viscosity of the fractions ("Crystex analysis").

| Fraction no. | T1-T3 [°C] | IV [dl/g] | IV-SF [dl/g] | IV-CF [dl/g] | C2-SF [wt%] | C2-CF [wt%] | SF [wt%] | C2 [w%] |
|---|---|---|---|---|---|---|---|---|
| 1 | 100 | - | - | - | - | - | - | - |
| 2 | 120 | 1.48 | 1.69 | 1.45 | 37.3 | 32.0 | 8.1 | 32.8 |
| 3 | 130 | 1.63 | 2.03 | 1.61 | 37.7 | 37.4 | 7.8 | 37.4 |

Multistage molar mass-fractionated dissolution of solid polymer material mixtures in n-hexane

Similar dissolution experiments as described above were performed for the PP-regrind basic material with n-hexane instead of n-decane as the solvent.

*Dissolution rate*

The average dissolution rate percentages (wt%) obtained for the PP-regrind basic material in n-hexane per dissolution stage at the different conditions are shown in Table 9.

Table 9: Weight percentage of dissolved fractions in n-hexane.

| Fraction No. | Dissolution temperature T1-T8 [°C] | Pressure P1-P8 [MPa] | Residence time M1-M8 [min] | Undissolved material U1-U8 [g] | Dissolution rate [wt%] |
|---|---|---|---|---|---|
| 1 | 80 | 0.19 | 30 | 23.0 | 4.1 |
| 2 | 90 | 0.21 | 30 | 22.3 | 3.0 |
| 3 | 100 | 0.31 | 30 | 19.4 | 12.1 |
| 4 | 110 | 0.40 | 30 | 13.3 | 25.3 |

(continued)

| Fraction No. | Dissolution temperature T1-T8 [°C] | Pressure P1-P8 [MPa] | Residence time M1-M8 [min] | Undissolved material U1-U8 [g] | Dissolution rate [wt%] |
|---|---|---|---|---|---|
| 5 | 120 | 0.48 | 30 | 7.1 | 25.9 |
| 6 | 130 | 0.59 | 30 | 3.6 | 14.7 |
| 7 | 140 | 0.71 | 30 | 1.9 | 7.1 |
| 8 | 150 | 0.85 | 30 | 1.8 | 0.9 |
| Total polyolefin recovery rate | | | | | 93,1 ± 0,7 |

The total polyolefin recovery rate of all fractions of 93.1 ± 0.7 wt% correlates with the feedstock polyolefin content of ca. 94 wt% in the feedstock solid polymer material mixture "PP-regrind basic material", so that the polyolefin material has been recovered quantitatively.

*Content of fractions*

The solidified polyolefin fractions (F1-F7) and the undissolved material at 140 °C (U7) were analyzed for their contents by FTIR and the melting temperatures of the PE and PP peaks were determined via DSC (Table 10, FTIR for the C2 and C3 content), as described in the method section.

Table 10: Content of the fractions (FTIR, DSC analysis).

| Fraction no. | T1-T7 [°C] | C2 in [wt%] | C3 in [wt%] | Tm (PE) [°C] | Tm (PP) [°C] | Predominant polyolefin type |
|---|---|---|---|---|---|---|
| 1 | 80 | 85 | 14.4 | 108.4 | - | LDPE/LLDPE |
| 2 | 90 | 49 | 50.8 | 120.4 | 143.5 | EPR |
| 3 | 100 | 70 | 30 | 131.5 | 153.2 | HDPE/(random EP copolymer) |
| 4 | 110 | 24 | 72 | 132.1 | 165.1 | i-PP/(HDPE) |
| 5 | 120 | 40 | 58 | 132 | 164.6 | |
| 6 | 130 | 33 | 65.5 | 131.1 | 164.5 | |
| 7 | 140 | 43 | 56 | 129.6 | 163.5 | |
| U7 | | 63 | 36 | 132 | 166.1 | HDPE/(i-PP) |

Correlation of the melting temperatures and the C2/C3 contents in Table 10 indicates that Fraction 1 predominantly contains LDPE and/or LLDPE. This fraction may be used if a polyolefin with high LDPE/LLDPE content is to be provided, where the presence of polypropylene is to be avoided. Fraction 2 is an almost pure EPR (ethylene propylene rubber) fraction comprising a PP to PE in a 1:1-ratio. In Fractions 4 to 6, the predominant polyolefin is i-PP, while the undissolved material (U7) contains mostly HDPE. Fractions 4 to 6 may be used if a polyolefin with high i-PP content is to be provided, where especially the compounding allows the compatibility of i-PP beside HDPE by the addition of compatilizer agents.

*Enrichment of one polyolefin component*

For Fraction 1 and Fraction 4, the (wt/wt) ratio of PP to PE was calculated from the C2 and C3 contents in Table 10. Accordingly, a ratio of about 6:1 for PE to PP was reached in Fraction 1, and a ratio of about 3:1 for PP to PE was reached in Fraction 4. When compared to the initial ratio of about 5:4 (exact: 53:41) for PP to PE in the PP-regrind basic material, enrichment of PE in Fraction 1 and PP in Fraction 4 can be observed. Further, when considering the that Fraction 1 predominantly contains LDPE and/or LLDPE as the PE component, while in the PE content of the PP-regrind basic material also HDPE is present, the obtained enrichment factor for the polyolefin component of interest is very high (i.e. higher than 10). Moreover, Fraction 2 contains almost pure ethylene propylene rubber, why the enrichment factor for this component is even higher.

*Molar mass and polydispersity index*

Molar mass (molecular weights, $M_n$, $M_w$ and $M_z$) and the polydispersity index were determined for each of the fractions of the PP-regrind basic material, as described in the method section. The results are summarized in Table 11.

Table 11: Molecular weight and polydispersity index of PP-regrind basic material.

| Fraction no. | T1-T6 [°C] | $M_n$ [g/mol] | $M_w$ [g/mol] | $M_z$ [g/mol] | PDI |
|---|---|---|---|---|---|
| 1 | 80 | 10100 | 78100 | 331000 | 7.8 |
| 2 | 90 | 11900 | 97300 | 297000 | 8.8 |
| 3 | 100 | 19300 | 119000 | 504000 | 6.2 |
| 4 | 110 | 29400 | 142000 | 420000 | 4.8 |
| 5 | 120 | 28900 | 162000 | 588000 | 5.6 |
| 6 | 130 | 31400 | 175000 | 670000 | 5.6 |

In addition, dissolution experiments were performed with technically pure PP from PCW (i.e. having a PP content of at least 95 wt%), in analogy to the experiments with the PP-regrind basic material. The obtained results are shown in Table 12.

Table 12: Molecular weight and polydispersity index of technically pure PP material (PCW-source).

| Fraction no. | T2-T5 [°C] | $M_n$ [g/mol] | $M_w$ [g/mol] | $M_z$ [g/mol] | PDI |
|---|---|---|---|---|---|
| 2 | 90 | 11900 | 73900 | 219000 | 6.2 |
| 3 | 100 | 20100 | 106000 | 295000 | 5.3 |
| 4 | 110 | 32400 | 142000 | 370000 | 4.3 |
| 5 | 120 | 47400 | 173000 | 456000 | 3.7 |

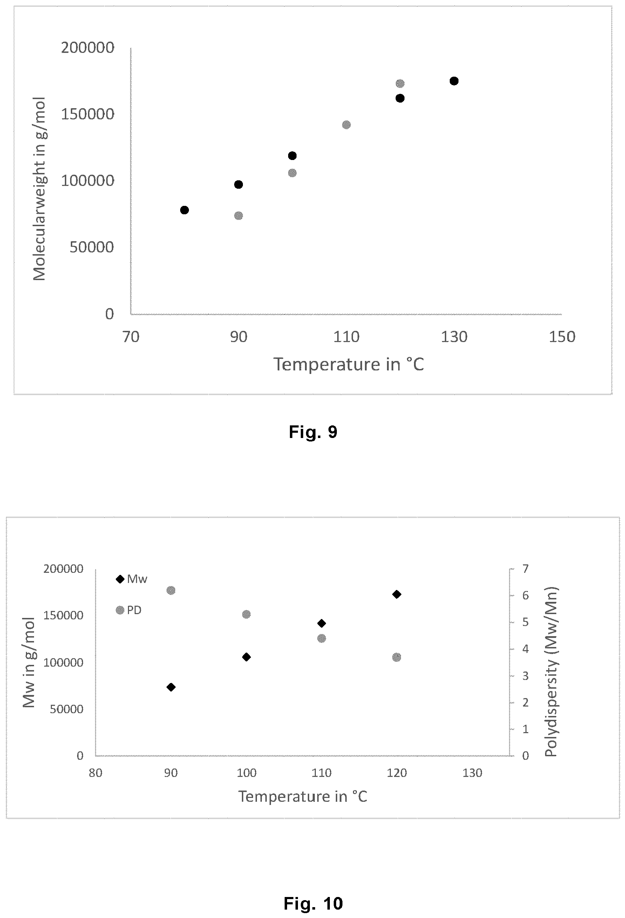

Molar mass (molecular weights, $M_n$, $M_w$ and $M_z$) and the polydispersity index PDI were also determined for the obtained fraction. The results for the weight average molecular weight ($M_w$) for the fractions of the PP-regrind basic material (black dots) and the pure PP material (grey dots) are shown in the diagram of Figure 9. For both materials, the molecular weights of the fractions proportionally increase with the dissolution temperature.

The polydispersity index proportionally decreases with the dissolution temperature, as depicted in Figure 10 for the technically pure PP material, where the polydispersity index ("PD") and the molecular weight ("$M_w$") are plotted against the dissolution temperature of the respective fraction. Decrease of the polydispersity index indicates that the molecular weight distribution gets narrower for fractions at higher dissolution temperatures. In the PP-regrind material, a break in the proportionally of the polydispersity index to the dissolution temperature in the higher fractions occurs, likely due to the change of the polyolefin type (i.e. particularly change in the ratio of PP to HDPE). More homogeneous polymer starting materials show more constant proportionality of PDI to the dissolution temperature.

*Melt flow rate*

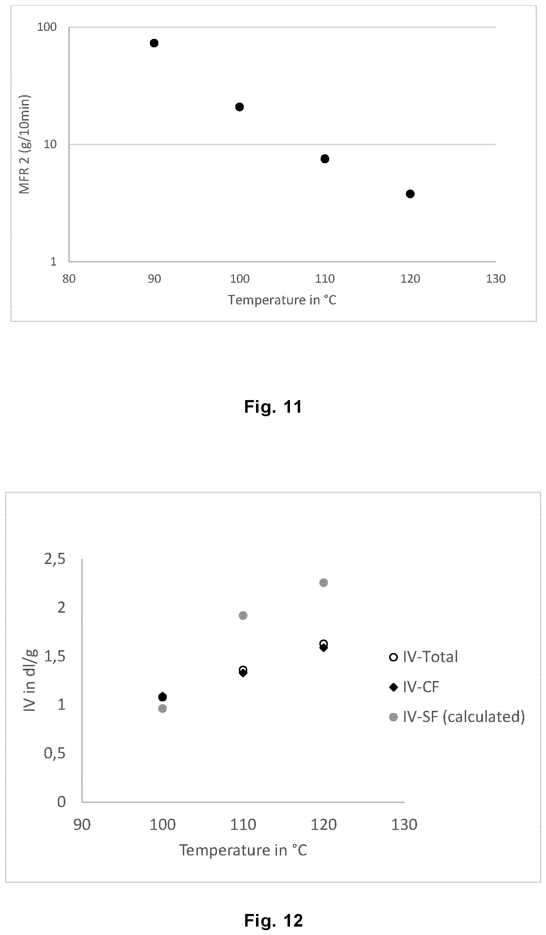

The melt flow rates ($MFR_2$) were determined for the fractions of the PP materials, as described in the method section. In Figure 11, the $MFR_2$ values for the fractions of the technically pure PP material are shown. $MFR_2$ decreases with increased dissolution temperature. Similar trend was obtained for the PP-regrind basic material (data not shown).

*Intrinsic viscosity*

Intrinsic viscosity (IV) was determined by the "Crystex analysis", as described in the method section, for the fractions of both PP materials (PP-regrind basic material and technically pure PP material), wherein the fractions were obtained by dissolution experiments as described above, however, at the dissolution temperatures indicated in Tables 13 and 14. The results are summarized in Tables 13 and 14.

Table 13: Intrinsic viscosity of the PP-regrind basic material fractions.

| Fraction no. | T1-T3 [°C] | IV [dl/g] | IV-SF [dl/g] | IV-CF [dl/g] | C2-SF [wt%] | C2-CF [wt%] | SF [wt%] | C2 [w%] |
|---|---|---|---|---|---|---|---|---|
| 1 | 100 | 1.41 | 0.97 | 1.43 | 43.4 | 71.3 | 4.6 | 70.4 |
| 2 | 110 | 1.52 | 1.73 | 1.49 | 31.0 | 29.1 | 5.7 | 29.3 |
| 3 | 120 | 1.73 | 2.19 | 1.71 | 41.0 | 44.4 | 4.5 | 43.6 |

Table 14: Intrinsic viscosity of the technically pure PP material fractions (PCW-source).

| Fraction no. | T1-T3 [°C] | IV [dl/g] | IV-SF [dl/g] | IV-CF [dl/g] | C2-SF [wt%] | C2-CF [wt%] | SF [wt%] | C2 [w%] |
|---|---|---|---|---|---|---|---|---|
| 1 | 100 | 1.08 | 0.96 | 1.09 | 22.7 | 1.9 | 7.8 | 3.1 |
| 2 | 110 | 1.36 | 1.92 | 1.33 | 35.5 | 2.2 | 5.1 | 3.6 |
| 3 | 120 | 1.63 | 2.26 | 1.59 | 37.5 | 2.8 | 6 | 4.5 |

Figure 12 visualizes the proportional increase of the intrinsic viscosity with increased dissolution temperature for the technically pure PP material. Similar trend is shown for IV-values of PP-regrind (as listed in Table 14 but not shown in a diagram).

*Summary*

By the above-described multistage dissolution experiments, polyolefin fractions were separated and purified from solid polymer material mixture. The fractions show different properties in terms of molecular weight, polydispersity index, intrinsic viscosity and melt flow rate. These properties decrease or increase proportionally with the increase of dissolution temperature.

Accordingly, fractions with defined properties can be obtained. For examples, polyolefins of low and defined $MFR_2$ polyolefin grades with lower polydispersity than the solid polymer material mixture can be provided. This is advantageously in reprocessing (compounding) of the polymer grades, so that the ratio of virgin material addition for the marketable polyolefin grade can be reduced in comparison to the state of the art or more advantageously completely avoided. The adjustment of high $MFR_2$ polyolefin grades in compounding is generally done by thermal/radical degradation, whereby the adjustment of low $MFR_2$ polyolefin grades is done by the addition of virgin polyolefin materials to the secondary recycling material. Furthermore, the compounding itself is simpler, if a constant MFR-polymer grade with narrow mol mass distribution is processed. The same applies to samples with defined intrinsic viscosity.

Further, an enrichment of particular polyolefin components is reached for particular fractions at different dissolution temperatures, whereby a polyolefin type or component is predominant in some fractions. This allows for recycling of polyolefin grades to obtain widely marketable products.

Decolorizing and hot solution filtration

Additional experiments were carried out to investigate the preparation of polyolefin fractions with even higher purity, in particular when using n-hexane as a solvent.

In general, generated oligomers and waxes can be removed sufficient in solution polymerization processes by cheap mass pollution filter materials. For the decoloring of paraffinic waxes, generated in petrochemical processes, bentonite, activated clays or bauxite have been used to increase the quality by decolorizing through physical and chemical adsorbents at temperatures from 70 to 120 °C - Waxes: Ullmann's Encyclopedia , 2015.

*Decolorizing*

In the experimental set-up, a heatable adsorbent filled small column (Ø 10/150 mm) was positioned behind the pressure stirred tank in the dip pipe and before the flash devolatilisation unit. The investigated adsorber materials were charcoal and bentonite as specified in Table 4. PP-regrind basic material (ca. 24 g) was dissolved in n-hexane (ca. 125 g) at 140 °C for 60 min in the pressure stirred tank (1-stage). The polymer containing solution with a dissolution temperature of 140 °C was discharged over the dip pipe, passing the adsorber material packed column under operation pressure (ca. 0.7 MPa) before flash devolatilisation took place and the obtained slurry was collected and qualitatively evaluated by the color of the solvent and the solidified polyolefin. Charcoal did not sufficiently remove the light grey color from the solidified polymer fraction, although the solvent appeared transparent. In contrast, the use of bentonite led to decolorizing of both the overlaying solvent that appeared transparent and the solidified polyolefin fraction that was obtained as white (uncolored) material.

*Hot solution filtration*

Further experiments were carried out to remove the inorganic (filler) content from polymer-containing solution by hot filtration. In the experimental set-up, a heatable filter element (Ø 15/30 mm) was positioned behind the pressure stirred tank in the dip pipe and before flash devolatilisation unit. The investigated filter materials were a a) labor-typically black band filter (3 layers) and b) a cellulose fiber based filter element CJC 15/12 as specified in Table 4. Hot solution filtration was executed at 140 °C and 0.7 MPa with the PE-regrind basic material. Subsequently, the solidified polyolefin fraction was oxidized ("ashing") at 600 °C in a lab muffle furnace and re-weighted, to analyze the content of the inorganic (filler) material in the fractions versus the origin polymer material. The results are summarized in Table 15, showing the ash content in wt% based on the total weight of the respectively used solid material.

Table 15: Inorganic ash content in PE-regrind basic material and fractions with and without filtration.

| Sample | Ash content [wt%] |
|---|---|
| PE-regrind basic material | 1.7 |
| 140 °C-fraction: no hot filtration, settling | 0.65 |
| 140 °C-fraction: hot filtration with black band filter (a) | 0.26 |
| 140 °C-fraction: hot filtration with cellulose fiber (b) | 0.05 |

As can be seen, the original ash content in the solid material mixture "PE-regrind basic material" could be reduced by more than 60 % by settling within pressure stirred tank, by more than 80 % by the use of a typically black band filter and by more than 95 % by fine filtration via cellulose fiber.

Thus, the content on originally small-sized particles can be adjusted, to obtain a solidified polyolefin fraction without additives and fillers, which advantageously allows a defined adjustment of the additive content in the marketable polyolefin grade during compounding.

Flash devolatilisation and pressure boosting

Further experiments were performed with flash devolatilisation in combination with a pre-orientated pressure increase (pressure booster) of the polymer-containing fraction. Therefore the polyolefin-containing hot solution (140 °C, 60 min, 24 g PP-regrind basic material, 125 g n-hexane) in the pressure stirred tank was pressurized by overlaying $N_2$ to increase the pressure to a defined pressure level as depicted in Table 16. The pressurized hot solution was subsequently discharged over the integrated dip pipe, heated up to 185 °C by an integrated heatable double wall tube heat exchanger, throttle valve, 1-media spray nozzle (firm Lechler, cluster solid jet, spillback nozzle) into a heatable flash tank at 70 °C (1,000 ml, flash devolatilisation tank). The collected material in the flash tank was analyzed for the residual solvent content in the obtained solidified material fraction. The results are shown in Table 16.

Table 16: Residual solvent content in the solidified polyolefin fraction after pressure increase and flash devolatilisation.

| Sample no. | Pressure booster [MPa] | Residual solvent content in polyolefin fraction [wt%] |
|---|---|---|
| 1 | 1.0 | 18,5 |
| 2 | 4.0 | 13,4 |
| 3 | 8.0 | 5,5 |
| 4 | 9.5 | 2,0 |
| 5 | 10.0 | 0,95 |

(continued)

| Sample no. | Pressure booster [MPa] | Residual solvent content in polyolefin fraction [wt%] |
|---|---|---|
| 6 | 10.5 | 0,25 |

As can be seen, the residual solvent content in the recovered solid polyolefin fraction can be significantly reduced to residual solvent contents lower than 5 wt% by pressures higher than 8 MPa in a 1-stage flash devolatilisation unit.

In an up-scaled (commercial) process, the pressure increase will be provided by a high pressure pump after the dissolution unit, before heating up the solution within the flash devolatilisation unit. Thus, temperatures lower than 210 °C can be adjusted to advantageously avoid thermal degradation within the devolatilisation unit.

**Claims**

1. A process for separating polyolefin fractions from solid polymer material mixtures by molar mass fractionation, the process comprising the steps of:

A) providing a solid polymer material mixture comprising at least 75 wt% of polyolefin material, based on the total weight of the solid polymer material mixture, wherein the polyolefin material comprises polypropylene and/or polyethylene;

B1) contacting the solid polymer material mixture with a non-polar solvent comprising at least one n-alkane comprising from 5 to 10 carbon atoms, to form a first composition (C1) comprising the solid polymer material mixture and the solvent;

C1) heating the first composition (C1) at a first dissolution temperature (T1) in the range of 80 to 120 °C and a first pressure (P1) in the range of 0.1 to 1.1 MPa abs. for a first period (M1) of from 5 min to 2 h, to obtain a first solution (S1) comprising the solvent and a first polyolefin fraction (F1), the first polyolefin fraction (F1) being dissolved in the solvent, and a first undissolved material (U1);

D1) separating the first undissolved material (U1) from the first solution (S1);

E1) separating the first polyolefin fraction (F1) from the first solution (S1) to obtain a solidified first polyolefin fraction (F1) having a first weight average molecular weight ($M_w$), and optionally recovering the solvent;

B2) contacting the separated first undissolved material (U1) with a non-polar solvent comprising at least one n-alkane comprising from 5 to 10 carbon atoms, to form a second composition (C2) comprising the separated first undissolved material (U1) and the solvent;

C2) heating the second composition (C2) at a second dissolution temperature (T2) in the range of 90 to 160 °C, with the proviso that the second dissolution temperature (T2) is higher than the first dissolution temperature (T1), and a second pressure (P2) in the range of 0.1 to 1.1 MPa abs. for a second period (M2) of from 5 min to 2 h, to obtain a solution (S2) comprising the solvent and a second polyolefin fraction (F2), the second polyolefin fraction (F2) being dissolved in the solvent, and, optionally, a second undissolved material (U2);

D2) optionally, separating the second undissolved material (U2) from the second solution (S2); and

E2) separating the second polyolefin fraction (F2) from the second solution (S2) to obtain a solidified second polyolefin fraction (F2) having a second weight average molecular weight ($M_w$) that is higher than the first weight average molecular weight ($M_w$) of the first polyolefin fraction (F1), and optionally recovering the solvent.

2. The process according to claim 1, wherein the polyolefin material comprises polypropylene and polyethylene in a (wt/wt) ratio of polyethylene to polypropylene or of polypropylene to polyethylene of at least 3:1.

3. The process according to any one of the proceeding claims, wherein the process further comprises the steps of:

B3) contacting the separated second undissolved material (U2) with a non-polar solvent comprising at least one n-alkane comprising from 5 to 10 carbon atoms, to form a third composition (C3) comprising the separated second undissolved material (U2) and the solvent;

C3) heating the third composition (C3) at a third dissolution temperature (T3) in the range of 100 to 180 °C, with the proviso that the third dissolution temperature (T3) is higher than the second dissolution temperature (T2), and a third pressure (P3) in the range of 0.1 to 1.1 MPa abs. for a third period (M3) of from 5 min to 2 h, to obtain a third solution (S3) comprising the solvent and a third polyolefin fraction (F3), the third polyolefin fraction (F3) being dissolved in the solvent, and, optionally, a third undissolved material (U3);

D3) optionally, separating the third undissolved material (U3) from the third solution (S3); and

E3) separating the third polyolefin fraction (F3) from the third solution (S3) to obtain a solidified third polyolefin fraction (F3) having a third weight average molecular weight ($M_w$) that is higher than the second weight average molecular weight ($M_w$) of the second polyolefin fraction (F2), and optionally recovering the solvent.

4. The process according to any one of the preceding claims, wherein the process further comprises the following steps in-between step A and B1:

F) contacting the solid polymer material mixture with a polar solvent at a temperature in the range of 20 to 50 °C and atmospheric pressure for a period of from 5 min to 2 h to dissolve non-polyolefin polymer material; and

G) separating the non-polyolefin polymer material from the solid polymer material mixture.

5. The process according to any one of the preceding claims, wherein the first dissolution temperature (T1) is in the range of 80 to 110 °C, and/or the second dissolution temperature (T2) is in the range of 100 to 150 °C, and/or the third dissolution temperature (T3) is in the range of 140 to 180 °C.

6. The process according to any one of the preceding claims, wherein the non-polar solvent recovered in step E1 and/or E2 is reused for step B1 and/or B2.

7. The process according to any one of the preceding claims, wherein the process is a continuous process, preferably using a stirred tank cascade or a multistage stirred cell cascade.

8. The process according to any one of the preceding claims, wherein the process further comprises at least one of the steps:

H) reducing the size by a pre-process such as grinding and/or crushing and/or shredding and/or sizing of the solid polymer material mixture to obtain particles of a size of less than 30 mm, preferably of less than 20 mm, more preferably of less than 10 mm;

I) enriching the polyolefin content of the solid polymer material mixture to comprise at least 75 wt% of the polyolefin material, based on the total weight of the polymer material mixture, preferably by mechanical treatment processes;

J) washing the solid polymer material mixture;

K) L/S separation of non-polymer material;

L) decolorizing any one of the polyolefin fractions; and

M) analyzing the content of any one of the polyolefin fractions.

9. The process according to any one of the preceding claims, wherein any one or each of steps E1, E2 and E3 is performed by a pressure increase and flash devolatilisation of the solvent, preferably using a spray nozzle.

10. The process according to any one of the preceding claims, wherein the second weight average molecular weight ($M_w$) of the second polyolefin fraction (F2) is higher than the first weight average molecular weight ($M_w$) of the first polyolefin fraction (F1) by at least 5 %, preferably at least 10 %, more preferably at least 15 %, most preferably at least 20 %, based on the weight average molecular weight of the first polyolefin fraction (F1).

11. The process according to any one of the preceding claims, wherein the second polyolefin fraction (F2) has a lower polydispersity index (PDI) than the first polyolefin fraction (F1), preferably lower by at least 5 %, more preferably at least 7 %, most preferably at least 8 %, based on the polydispersity index of the first polyolefin fraction (F1).

12. The process according to any one of the preceding claims, wherein the second polyolefin fraction (F2) has a lower melt flow range $MFR_2$ (230 °C, 2.16 g/10 min) than the first polyolefin fraction (F1), preferably lower by at least 20 %, more preferably at least 35 %, most preferably at least 50 %, based on the melt flow range $MFR_2$ of the first polyolefin fraction (F1).

13. The process according to any one of the preceding claims, wherein at least one of the polyolefin fractions (F1), (F2) or (F3) comprises a polypropylene (PP) component and optionally a high density polyethylene (HDPE) component, wherein the (wt/wt) ratio of PP to HDPE is at least 75:25, preferably at least 80:20, more preferably at least 90:10, such as at least 95:5.

**14.** A polyolefin fraction obtainable by the process of any one of the preceding claims.

**15.** Use of a polyolefin fraction according to claim 14 in the manufacture of an article.

PMM    SO

P1

S1(F1)

C1,T1

D1    M1

U1

Fig. 1A

SO

P2

S2(F2)

C2,T2

D2    M2

D2    U2

Fig. 1B

Fig. 2

Fig. 3

**Fig. 4**

**Fig. 5**

**Fig. 6**

**Fig. 7**

Fig. 8

**Fig. 9**

**Fig. 10**

**Fig. 11**

**Fig. 12**

Europäisches
Patentamt

European
Patent Office

Office européen
des brevets

# EUROPEAN SEARCH REPORT

Application Number

EP 21 16 8640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/005401 A1 (HERRLICH TIMO [DE] ET AL) 1 January 2015 (2015-01-01)<br>* claims 1,20 *<br>* example 1 *<br>* paragraph [0023] *<br>----- | 1-15 | INV.<br>C08J11/08<br>B29B17/02 |
| X,D | DE 10 2016 015199 A1 (APK AG [DE]) 21 June 2018 (2018-06-21)<br>* claims 2,3,6 *<br>* page 1 *<br>----- | 1-15 | |
| X | CA 2 376 488 A1 (DER GRUENE PUNKT DUALES SYST [DE]) 21 December 2000 (2000-12-21)<br>* claim 1 *<br>----- | 1-15 | |

TECHNICAL FIELDS
SEARCHED (IPC)

C08J
B29B

The present search report has been drawn up for all claims

| Place of search | Date of completion of the search | Examiner |
|---|---|---|
| The Hague | 1 November 2021 | Queste, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 16 8640

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2021

| Patent document cited in search report | | | Publication date | Patent family member(s) | | | Publication date |
|---|---|---|---|---|---|---|---|
| US 2015005401 | A1 | | 01-01-2015 | BR | 112014019508 | B1 | 15-12-2020 |
| | | | | CN | 104159953 | A | 19-11-2014 |
| | | | | CO | 7141465 | A2 | 12-12-2014 |
| | | | | DE | 102012002704 | A1 | 14-08-2013 |
| | | | | EP | 2814876 | A1 | 24-12-2014 |
| | | | | ES | 2572268 | T3 | 31-05-2016 |
| | | | | JP | 6257532 | B2 | 10-01-2018 |
| | | | | JP | 2015508110 | A | 16-03-2015 |
| | | | | MX | 346049 | B | 02-03-2017 |
| | | | | PT | 2814876 | E | 20-06-2016 |
| | | | | US | 2015005401 | A1 | 01-01-2015 |
| | | | | WO | 2013120586 | A1 | 22-08-2013 |
| DE 102016015199 | A1 | | 21-06-2018 | NONE | | | |
| CA 2376488 | A1 | | 21-12-2000 | AT | 238382 | T | 15-05-2003 |
| | | | | AU | 6263600 | A | 02-01-2001 |
| | | | | BR | 0011704 | A | 26-03-2002 |
| | | | | CA | 2376488 | A1 | 21-12-2000 |
| | | | | CN | 1370196 | A | 18-09-2002 |
| | | | | DE | 19927523 | A1 | 21-12-2000 |
| | | | | DK | 1189979 | T3 | 11-08-2003 |
| | | | | EP | 1189979 | A1 | 27-03-2002 |
| | | | | ES | 2194758 | T3 | 01-12-2003 |
| | | | | HK | 1046917 | A1 | 30-01-2003 |
| | | | | JP | 2003502466 | A | 21-01-2003 |
| | | | | PT | 1189979 | E | 30-09-2003 |
| | | | | WO | 0077082 | A1 | 21-12-2000 |

EPO FORM P0459

For more details about this annex : see Official Journal of the European Patent Office, No. 12/82

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3339361 A1

- DE 102016015199 A1

**Non-patent literature cited in the description**

- **CHRISTIAN REICHERT.** Solvatochromic Dyes as Solvent Polarity Indicators. *Chemical Reviews,* 1994, vol. 94 (8), 2319-2558
- **M. ZAHEDI ; M. AHMADI ; M. NEKOOMANESH.** *J. Appl. Polym. Sci,* 2008, vol. 108, 3565-3571
- **SIGNORET.** Alterations of plastic spectra in MIR and the potential impacts on identification towards recycling. *Resources, conservation and Recycling journal,* 2020, vol. 161
- **LJILJANA JEREMIC ; ANDREAS ALBRECHT ; MARTINA SANDHOLZER ; MARKUS GAHLEITNER.** Rapid characterization of high-impact ethylene-propylene copolymer composition by crystallization extraction separation: comparability to standard separation methods. *International Journal of Polymer Analysis and Characterization,* 2020, vol. 25 (8), 581-596
- Fractionation. **SOARES, J.B.P.** Encyclopedia Of Polymer Science and Technology. John Wiley & Sons, 2001, vol. 10, 75-131
- **G. SINGH ; A. KOTHARI ; V. GUPTA.** *Polymer Testing,* 2009, vol. 28 (5), 475
- **Z. ZHOU ; R. KUEMMERLE ; X. QIU ; D. REDWINE ; R. CONG ; A. TAHA ; D. BAUGH ; B. WINNIFORD.** *J. Mag. Reson.,* 2007, vol. 187, 225
- **V. BUSICO ; P. CARBONNIERE ; R. CIPULLO ; C. PELLECCHIA ; J. SEVERN ; G. TALARICO.** *Macromol. Rapid Commun.,* 2007, vol. 28, 1128
- **CHENG, H. N.** *Macromolecules,* 1984, vol. 17, 1950
- **W-J. WANG ; S. ZHU.** *Macromolecules,* 2000, vol. 33, 1157
- Waxes: Ullmann's Encyclopedia. 2015